# EUROPEAN PATENT SPECIFICATION

(11) **EP 1 024 165 B1**
(45) Date of publication and mention of the grant of the patent: **09.07.2003**
(21) Application number: 98945590.2
(22) Date of filing: 02.10.1998
(51) Int. Cl.: C08K 5/00

(54) **STABILIZER COMPOSITION FOR ORGANIC POLYMERIC MATERIALS CONTAINING 6-HYDROXYCHROMAN COMPOUNDS AND ORGANIC POLYMERIC MATERIAL COMPOSITIONS**
STABILISATORENZUSAMMENSETZUNG FÜR ORGANISCHE POLYMERMATERIALIEN ENTHALTEND 6-HYDROXICHROMANVERBINDUNGEN UND ORGANISCHE POLYMERMATERIALZUSAMMENSETZUNGEN
COMPOSITION STABILISANTE POUR MATERIAUX POLYMERES ORGANIQUES CONTENANT DES COMPOSES 6-HYDROXYCHROMAN ET COMPOSITIONS DE MATERIAUX POLYMERES ORGANIQUES CORRESPONDANTES

(30) Priority: 02.10.1997 JP 26973597; 17.04.1998 JP 10826098
(43) Date of publication of application: 02.08.2000
(73) Proprietor: API Corporation, Osaka-shi, Osaka 541-0046 (JP)
(72) Inventor: INOUE, Takeshi, Yoshitomi Fine Chemicals, Ltd., Shikujo-gun Fukuoka 871-8550 (JP); HORIE, Shoichi, Yoshitomi Fine Chemicals, Ltd., Shikujo-gun Fukuoka 871-8550 (JP)
(74) Representative: Weber, Thomas, Dr.Dipl.-Chem.
(86) International application number: JP9804462
(87) International publication number: WO99018154

(56) References cited:
- WO-A-96/17886
- WO-A-97/00285
- WO-A-97/49758
- GB-A- 2 215 727
- JP-A- 2 225 542
- JP-A- 53 078 248
- JP-A- 53 114 852
- JP-A- 54 020 056
- JP-A- 62 086 036
- JP-A- 63 137 041
- PATENT ABSTRACTS OF JAPAN vol. 011, no. 398 (C-466), 25 December 1987 (1987-12-25) & JP 62 158737 A (CHISSO CORP), 14 July 1987 (1987-07-14)
- PATENT ABSTRACTS OF JAPAN vol. 003, no. 079 (C-051), 6 July 1979 (1979-07-06) & JP 54 055043 A (MITSUI PETROCHEM IND LTD), 1 May 1979 (1979-05-01)

## Description

### Technical Field

The present invention relates to a stabilized organic material composition. More particularly, the present invention relates to a stabilized organic polymer material composition wherein the organic polymer material susceptible to degradation due to oxidation, heat or light has become hardly degraded in qualities, such as physical properties, appearance and the like, even after thermal hysteresis (heat history) during processing and in use, and to a stabilizer for an organic polymer material.

### Background Art

An organic polymer material comprising organic compounds, such as natural polymer, synthetic polymer, fats and oils, lubricant oil, working oil and the like, is susceptible to degradation by oxidation, heat, light and the like, and loses utility. Therefore, various stabilizers called antioxidants have been studied and developed, which are added to organic polymers to give organic polymer material compositions that are not easily degraded. As these antioxidative stabilizers, phenolic compounds were studied in 1930s, phosphorus compounds were studied in 1940s, and various other antioxidants have been thereafter developed and used widely. At present, a variety of antioxidants have been widely used according to utility, and some particular antioxidants have been used in an extremely broad range.

In addition, plural kinds of antioxidants have been widely used in combination to allow simultaneous expression of different effects or synergistic effect. For example, a phosphorus antioxidant is added to a phenolic antioxidant to improve resistance to coloring.

In 1980s, a demand arose on a safer compound to overcome problems in hygiene and safety of phenolic antioxidants, and naturally-occurring vitamin E and 6-hydroxychroman compound having a structure similar to that of vitamin E were proposed as a substitute for phenolic antioxidants. An organic polymer material composition containing 6-hydroxychroman compound and phosphorus antioxidant in combination instead of phenolic antioxidant and phosphorus antioxidant was proposed. These phenolic antioxidant and phosphorus antioxidant were added because they show different effects. The mixing ratio was mostly described as from about equal amounts to about several times greater amounts and certain ratios were actually employed in working examples. However, a composition containing a 6-hydroxychroman compound has not come to be used widely as an antioxidant due to the unsolved problem of coloring. This compound is void of an approval for a known or novel chemical substance as prescribed in the Law Concerning Screening of Chemical Substances and Regulation of Their Manufacture, which is a due legal procedure necessary for marketing, or an approval under TSCA (The Toxic Substances Control Act) in US or EINECS (European Inventory of Existing Commercialized Chemical Substances) in Europe, which correspond and are similar to the former procedure.

In recent years, 3-arylbenzofuranone compound has been developed as a synergist of a phosphorus antioxidant and a phenolic antioxidant, but a more effective compound has been demanded.

The above-mentioned prior art is explained in detail by referring to specific publications.

The 6-hydroxychroman compound, which is an element of the stabilizer of the present invention for organic polymer materials, has been known from 1960s. The 6-hydroxychroman compound is known as an antioxidant for polyolefin and fats and oils as disclosed in JP-B-42-11064, US-A-1-3476772, Chemical Abstracts, vol. 70, 2500g *ibid*., vol. 50, 15104 and *ibid*., vol. 72, 130900r, German Patent No. DE-A-114916, and JP-A-49-72338.

JP-A-60-72980 discloses a stabilizer for an organic substance, which contains a 6-hydroxychroman derivative in a proportion of about 0.001 wt% - about 5 wt% of the organic substance. In Examples, a single embodiment of use in the amount of 0.01 wt% is described, but concurrent use with other ingredients or stability during processing is not described or suggested.

JP-A-3-41135 discloses a food container improved in odor, which contains a polyolefin, an inorganic filler, a lubricant and/or an antistatic agent, and a 6-hydroxychroman compound in a proportion of 0.01 part by weight - 2.0 parts by weight per 100 parts by weight of polyolefin.

The phenolic antioxidant, which is another element of the stabilizer for organic polymer material in the present invention, is known well as an antioxidant for organic polymers and is an all-purpose antioxidant nowadays.

The phosphorus antioxidant used as an element of the stabilizer for organic polymer material in the present invention is known well as an antioxidant of organic polymers. For example, a phosphite compound and a phosphonite compound in combination with hindered phenol compound are used as a stabilizer for processing a synthetic resin, as described in JP-B-56-5417, JP-B-56-32339 and the like. It is an all-purpose antioxidant nowadays.

The following explains the technique for combined use of a 6-hydroxychroman compound and a different antioxidant.

JP-A-49-72338 describes a composition containing polyolefin and a 6-hydroxychroman derivative in about 0.005 wt% - about 5 wt%. In addition, it teaches that a combined use of a 6-hydroxychroman compound with a thiodialkanoic acid ester, which is a sulfur antioxidant, affords a synergistic effect, which in turn provides further stabilization. It also teaches that a combined use with phosphites similarly affords a synergistic effect, which in turn provides further stabilization of polyolefins. In Examples, however, only 0.1 wt% addition is disclosed and so is only an example of concurrent use with a different ingredient in the amount of 6-hydroxychroman of not less than 30 parts by weight % of the total amount of antioxidants. It does not describe or suggest the stability during processing.

JP-A-54-55043 discloses a polyolefin mixture containing vitamin E and tris(nonylphenyl) phosphite and the like and having superior stability during processing and hue, wherein vitamin E is contained in a proportion of 0.005 - 0.5 part by weight and a phosphite compound in a proportion of 0.005 - 0.5 part by weight, per 100 parts by weight of polyolefin. In Examples, a resin is used, which contains vitamin E in a proportion of 0.03 part by weight, three kinds of phosphite compounds in a proportion of 0.05 and 0.1 part by weight, and 2,6-di-tert-butyl-p-cresol, which is a phenolic antioxidant, in a proportion of 0.01 part by weight, per 100 parts by weight of polypropylene, and the test results showing the amounts of changes in the yellowness thereof are disclosed. Although this publication teaches that, when a different stabilizer is concurrently used with a phenolic antioxidant, such as tetrakis[methylene-3-(3,5-di-tert-butyl-4-hydroxyphenyl)propionate]methane, a synergistic effect may be acknowledged, specific conditions thereof are not disclosed at all.

JP-A-62-86036 also teaches the same as in JP-A-54-55043 with regard to a specific phosphorus antioxidant.

JP-A-8-245830 discloses a stabilizer composition comprising an α-tocopherol solution containing α-tocopherol, glycerol, glyceride surfactant and polyethylene glycol, and a phenolic antioxidant such as tetrakis[methylene-(3,5-di-tert-butyl-4-hydroxyphenyl)propionate]methane, which resolves the problem of coloring, but the proportion of α-tocopherol, which is a 6-hydroxychroman compound, relative to these antioxidants is disclosed as not less than 20 wt%.

Japanese Patent Application under PCT laid-open under Kohyo No. 6-504812 teaches addition of 50 - 1000 ppm, particularly preferably 50 - 200 ppm, of 6-hydroxychroman compound relative to the weight of polyether to inhibit oxidation of polyether. It also teaches that hindered phenol, which is an additional phenolic antioxidant, can be added in a proportion of 100 - 2000 ppm of the weight of polyether, and that organic phosphorous acid, which is a phosphorus antioxidant, can be added in 20 - 2000 ppm of the weight of polyether. As a preferable oxidation preventing composition, about 0.5 - 5 parts by weight of hindered phenol and 0.5 - 3 parts by weight of phosphorous acid are added per part by weight of tocopherol which is 6-hydroxychroman. From these, it is known that the upper limit of 6-hydroxychroman compound is 50% and the lower limit thereof is about 11%, of the total amount of these antioxidants by conversion, and examples disclose the use thereof in an amount of 33 wt% and 20 wt%.

JP-A-61-32342 discloses a polyolefin mixture having superior stability and hue, which is obtained by the concurrent use of polyolefin and vitamin E, which is a 6-hydroxychroman derivative, and a specific phosphite, which is a phosphorus antioxidant. The added amounts are 0.005 part by weight - 0.5 part by weight of vitamin E, 0.005 part by weight - 0.5 part by weight of phosphite, and 0.01 part by weight - 1 part by weight of a phenolic antioxidant, each per 100 parts by weight of polyolefin. The mixing ratio of these is not described or suggested in this publication, and in an example, vitamin E was added in an amount of about 21 wt% - about 38 wt% of the total amount of these antioxidants.

JP-A-63-105060 (US-A-4806580) teaches a stabilizer composition for a synthetic resin, which stabilizes more against discoloration, and which contains 1 part by weight of a 6-hydroxychroman derivative inclusive of vitamin E and 5 - 14 parts by weight of a specific phosphorus antioxidant. In the specification at page 2 lower left column, it is taught, as the background, that naturally occurring vitamin E and 6-hydroxychroman derivatives are used instead of a phenolic antioxidant to overcome a hygiene problem. When the above-mentioned mixing ratio is converted, it corresponds to about 6.7 wt% - about 16.7 wt% of the 6-hydroxychroman derivative inclusive of vitamin E relative to the total amount of the 6-hydroxychroman compound inclusive of vitamin E and the phosphorus antioxidant. In an example, the above-mentioned range is disclosed, and in a comparative example, compositions having the above-mentioned mixing ratios of 1:15 and 1:16 are disclosed. These mixing ratios correspond to about 6.3 wt% and about 5.9 wt% of the 6-hydroxychroman derivative inclusive of vitamin E, relative to the total amount of the 6-hydroxychroman compound inclusive of vitamin E and the phosphorus antioxidant.

Japanese Patent Application under PCT laid-open under Kohyo No. 6-504577 discloses a resin composition for resistance to radiation, which contains a 6-hydroxychroman compound inclusive of vitamin E, a specific phosphorus compound and a polyhydroxy compound (e.g., glycerol). The disclosed mixing ratio of the specific phosphorus compound to the 6-hydroxychroman compound is 0.5 - 20, preferably 1 - 10, more preferably 1 - 5, and most preferably 4. Described in examples are the mixing ratios of 1, 2, 4 and 9. These mixing ratios are taught to correspond to about 67 wt% - about 4.76 wt%, preferably 50 wt% - about 9.52 wt%, more preferably 50 wt% - 16.7 wt%, most preferably 20 wt%, of the 6-hydroxychroman derivative relative to the total amount of the 6-hydroxychroman compound and the phosphorus antioxidant. In examples, the embodiments of 50 wt%, 33.3 wt%, 20.0 wt% and 10.0 wt% are shown.

From the above-mentioned publications, the proportion of the 6-hydroxychroman compound relative to the total amount of the antioxidants contained in an organic polymer is generally 50 wt - 20 wt%, but the concurrent use of a 6-hydroxychroman compound and a phenolic antioxidant, or the concurrent use of three members of 6-hydroxychroman compound, phosphorus antioxidant and phenolic antioxidant is not specifically disclosed.

In the meantime, JP-A-7-233160 in Example 14 shown at the paragraph No. 0226 discloses 3-(3,4-dimethylphenyl)-5,7-di-tert-butyl-3H-benzofuran-2-one (compound 103 in this application) that can be used for the object similar to the object of the present invention. This compound is also described in the material for the lecture by C. Krohnke entitled "A major breakthrough in polymer stabilization" reported in the international convention relating to polyolefin (Polyolefins X international conference) held in Houston, Texas on February 23 - 26, 1997, as a synergist for phenolic antioxidants and phosphorus antioxidants. However, the synergistic effect is not satisfactory, and a more effective synergist has been demanded:
D1 (WO-A-97/49758) discloses a stabilizer composition comprising
   (a) at least one phenolic antioxidant,
   (b) at least one phosphorus antioxidant, and
   (c) at least one tocopherol compound,
   wherein the weight ratio of component (a) : component (b) is from 2:1 to 1:4 and the weight ratio of component (a) : component (c) is from 2:1 to 10:1.
   In said Reference, the tocopherol compound of component (c) is described as "any compound having the basic tocopherol structure of the vitamin E group". which is a compound having the following structure (R³, R⁴ and R⁵ are hydrogen or methyl). Vitamin E (α-tocopherol) is a compound where R³, R⁴ and R⁵ are methyl. 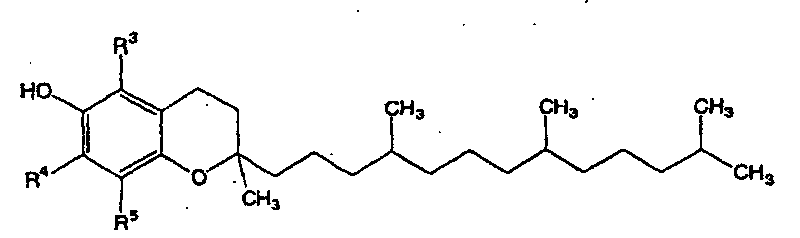
   A tocophrol compound has, at the 2-position of 6-hydroxychroman, a substituent having a long chain.
D2 (WO-A-97/00285) discloses a faint-smelling, light-, heat- and/or air-oxygen-stabilized molding material made of at least one styrene homopolymer or copolymer or acrylate or methcrylate polymers containing stabilizing amounts of, for example, 0.01 to 1% by weight of α-tocopherol, 0.1 to 2% by weight of an organic phosphite, and preferably 0.01 to 2% by weight of a phenolic antioxidant, in a quantitative ratio between α-tocopherol and phosphite from 1:1 to 1:4.
D3 (WO-A-96/17886) discloses a molding composition made from specific styrene/butadiene block copolymers, to prevent decomposition due to light, atmospheric oxygen and/or heat, wherein the molding composition contains
   0.01 to 1 wt.-% α-tocopherol,
   0.1 to 2 wt.-% organic phosphite, and
   0.01 to 2 wt.-% phenolic antioxidant.
D4 (GB-A-2215727) discloses a composition for use as a processing stabilizer (stabilizing composition), comprising
   a) 30-80 % by weight of a phosphorus antioxidant of the formula (I), and
   b) 20-70 % by weight of a phosphite compound (claim 1). Said Reference also discloses that this stabilizing composition can further obtain a phenolic antioxidant and α-tocopherol (vitamin E).
   JP-A.62-158737 discloses a stabilized polyolefin composition comprising 100 parts by weight of polyolefin,
   0.01 parts by weight of a 6-hydroxychroman compound of the formula I 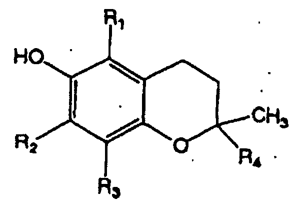 wherein R₁, R₂, and R₃ are each hydrogen or C1-4 alkyl, and R4 is C₁₋₁₆ alkyl or alkylene, and 0.01-1 part by weight of a phenol compound of the formula II or a phosphonite compound of the formula III.

JP-A-54-55043 discloses a polyolefin composition comprising a polyolefin, a vitamin selected from vitamin E group, and a phosphite compound selected from compounds of the formulas I, II and III. More specifically, said reference discloses a polyolefin composition comprising 100 parts by weight of a polyolefin, 0.005 parts by weight, preferably 0.01-0.2 parts by weight of a vitamin selected from vitamin E group, and 0.005-0.5 parts by weight, preferably 0,01-0.2 parts by weight, of the above-mentioned phosphite compound. Said reference further comprises that 0.01-1 part by weight of a phenotic stabilizer may be added to the above-mentioned composition, relative to 100 parts by weight of polyolefin.

A recent growing demand on an antioxidant effective for achieving superior heat stability and superior stability during processing, that permit higher temperature for high speed molding and high temperature molding of an alloy with an engineering plastic and the like, cannot be fully met by these known stabilizing compositions. Moreover, an antioxidant effective by the addition of a small amount thereof to achieve heat resistance and stability during processing has been increasingly demanded.

### Disclosure of the Invention

The present invention solves the above-mentioned problems and provides the following.
[1] A stabilizer composition for an organic polymer material, which comprises (a) a compound of the formula (1) 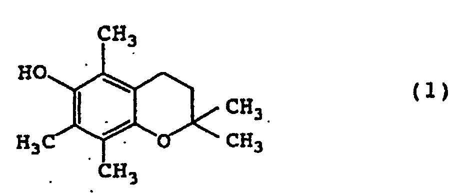 (hereinafter also to be referred to as the 6-hydroxychroman compound (1)); and (b) a phenolic antioxidant, wherein the component (a) is contained in a proportion of 1 wt% - 20 wt% and the component (b) is contained in a proportion of 99 wt% - 80 wt%, of the total amount of the component (a) and the component (b).
[2] The stabilizer composition of [1], further containing a phosphorus antioxidant.
[3] The stabilizer composition of [2], wherein the weight ratio of the amount of the phenolic antioxidant and the amount of the phosphorus antioxidant is 1:0.25 - 1:4.
[4] A stabilizer composition for an organic polymer material, which comprises (a) the 6-hydroxychroman compound (1), and (b) a phenolic antioxidant and a phosphorus antioxidant, wherein the component (a) is contained in a proportion of 1 wt% - 20 wt% and the component (b) is contained in a proportion of 99 wt% - 80 wt%, of the total amount of the component (a) and the component (b), and the weight ratio of the amount of the phenolic antioxidant and the amount of the phosphorus antioxidant is 1:0.25 - 1:4.
[5] A stabilizer composition for an organic polymer material, which contains (a) the 6-hydroxychroman compound (1), and (b) a phenolic antioxidant and a phosphorus antioxidant, wherein the component (a) is contained in a proportion of 1 wt% - 6.5 wt% and the component (b) is contained in a proportion of 99 wt% - 93.5 wt%, of the total amount of the component (a) and the component (b).
[6] A stabilizer composition for an organic polymer material, which comprises (a) a 6-hydroxychroman compound (1), and (b) at least one member selected from the group consisting of a phenolic antioxidant and a phosphorus antioxidant, wherein the component (a) is contained in a proportion of 1 wt% - 4.5 wt% and the component (b) is contained in a proportion of 99 wt% -95.5 wt%, of the total amount of the component (a) and the component (b).
[7] An organic polymer material composition, which comprises an organic polymer and a stabilizer composition of any of [1] - [6].
[8] An organic polymer material composition, which comprises an organic polymer and a stabilizer composition of any of [1] - [6], wherein the content of the component (a) in 100 parts by weight of the organic polymer material composition is 0.0005 part by weight - 0.025 part by weight.
[9] The composition of [8] wherein the content of the component (a) in 100 parts by weight of the organic polymer material composition is 0.0005 part by weight - 0.005 part by weight.
[10] An organic polymer material composition comprising (a) the 6-hydroxychroman compound (1), (b) at least one member selected from the group consisting of a phenolic antioxidant and a phosphorus antioxidant, and (c) an organic polymer, wherein the component (a) is contained in the range of 0.001 part by weight - 0.02 part by weight per 100 parts by weight of the total amount of the component (a), the component (b) and the component (c).
[11] An organic polymer material composition comprising (a) the 6-hydroxychroman compound (1), (b) at least one member selected from the group consisting of a phenolic antioxidant and a phosphorus antioxidant, and (c) an organic polymer, wherein the component (a) is contained in the range of 0.001 part by weight - 0.02 part by weight per 100 parts by weight of the total amount of the component (a), the component (b) and the component (c) and the total amount of the component (a) and the component (b) is 0.01 part by weight - 1 part by weight.
[12] An organic polymer material composition comprising (a) the 6-hydroxychroman compound (1), (b) at least one member selected from the group consisting of a phenolic antioxidant and a phosphorus antioxidant, and (c) an organic polymer, wherein the component (a) is contained in the range of 0.001 part by weight - 0.005 part by weight per 100 parts by weight of the total amount of the component (a), the component (b) and the component (c), and the total amount of the component (a) and the component (b) is 0.01 part by weight - 1 part by weight.
[13] An organic polymer material composition comprising (a) the 6-hydroxychroman compound (1), (b) at least one member selected from the group consisting of a phenolic antioxidant and a phosphorus antioxidant, and (c) an organic polymer, wherein the component (a) is contained in a proportion of 1 wt% - 20 wt% and the component (b) is contained in a proportion of 99 wt% - 80 wt% of the total amount of the component (a) and the component (b), and the component (a) in the range of 0.001 part by weight - 0.02 part by weight per 100 parts by weight of the total amount of the component (a), the component (b) and the component (c).
[14] An organic polymer material composition comprising (a) the 6-hydroxychroman compound (1), (b) a phenolic antioxidant and a phosphorus antioxidant, and (c) an organic polymer, wherein the component (a) is contained in a proportion of 1 wt% - 20 wt% and the component (b) is contained in a proportion of 99 wt% - 80 wt% of the total amount of the component (a) and the component (b), and the component (a) is contained in the range of 0.0005 part by weight - 0.005 part by weight per 100 parts by weight of the total amount of the component (a), the component (b) and the component (c).
[15] The composition of any of [7] - [14], wherein the organic polymer is a synthetic resin.
[16] The composition of any of [7] - [14], wherein the organic polymer is a polyolefin resin.
[17] The composition of any of [7] - [14], wherein the organic polymer is a polyethylene resin, a polypropylene resin, a'mixture or a compatible polymer of a polyethylene resin and a polypropylene resin, a compatible polymer containing a polyethylene resin and/or a polypropylene resin, an ethylene-vinyl acetate copolymer or an ethylene-propylene copolymer.
[18] The composition of any of [7] - [14], further containing a sulfur antioxidant and/or a light stabilizer.
[19] The composition of any of [7] - [14], having an improved stability during processing.

In the stabilizer composition for organic polymer materials and the organic polymer material composition of the present invention, the phenolic antioxidant may be at least one member selected from the group consisting of:
n-octadecyl 3-(3;5-di-tert-butyl-4-hydroxyphenyl)propionate, tetrakis[3-(3,5-di-tert-butyl-4-hydroxyphenyl)propionyloxymethyl]methane,
1,3,5-tris(3,5-di-tert-butyl-4-hydroxybenzyl) isocyanurate, and 1,3,5-trimethyl-2,4,6-tris(3',5-di-tert-butyl-4-hydroxybenzyl)benzene.

In the stabilizer composition for organic polymer materials and the organic polymer material composition of the present invention, the phosphorus antioxidant may be at least one member selected from the group consisting of:
tris(2,4-di-tert-butylphenyl) phosphite,
tetrakis(2,4-di-tert-butylphenyl)-4,4'-biphenylenediphosphonite, tetrakis(2,4-di-tert-butyl-5-methylphenyl)-4,4'-biphenylenediphosphonite,
bis(2,4-di-tert-butylphenyl) pentaerythritol diphosphite,
bis(2,6-di-tert-butyl-4-methylphenyl)pentaerythritol diphosphite,
2,2'-methylenebis(4,6-di-tert-butylphenyl) 2-ethylhexyl phosphite,
bis[2-methyl-4,6-bis(1,1-dimethylethyl)phenyl)phenyl] ethyl phosphite, and
2,2',2"-nitrilo[triethyltris(3,3',5,5'-tetra-tert-butyl-1,1'-biphenyl-2,2'-diyl)phosphite].

### Detailed Description of the Invention

As described under the above-mentioned Background Art, a 6-hydroxychroman compound inclusive of vitamin E is a superior antioxidant substituting phenolic antioxidants. It is known that a different antioxidant is used concurrently to prevent coloring of organic polymers.

As described in detail in the following, the composition of the present invention relates to a stabilizer for organic polymer materials containing the chroman compound in a proportion of 1 wt% - 20 wt%, preferably 1 wt% - 6.5 wt% and the like, of the total amount of antioxidants, an organic polymer material composition containing an extremely small amount of a 6-hydroxychroman compound, wherein the 6-hydroxychroman compound is contained in a proportion of 0.0005 wt% - 0.025 wt%, preferably 0.001 wt% - 0.005 wt%, of an organic polymer. The present invention is fundamentally distinct from a conventionally known technique explained in detail under Background Art, such as those containing a 6-hydroxychroman compound in a proportion of about 0.005 wt% - 0.5 wt% of an organic polymer material composition, those containing a phosphorus antioxidant in an amount of 1 to 4 times greater weight corresponding to 50 parts by weight% - 20 wt% relative to the total amount of antioxidant) relative to 6-hydroxychroman compound (and the like).

While the prior art teaches the use of 5 - 14 parts by weight of phosphorus antioxidant per part by weight of 6-hydroxychroman compound, examples of phenolic antioxidant are not shown. In addition, the object of invention is the use of 6-hydroxychroman derivative, such as vitamin E, as a substitute for phenolic antioxidant. Therefore, the technique concerns a composition of the 6-hydroxychroman compound and a phosphorus antioxidant.

The stabilized organic polymer material composition of the present invention is characterized by a strikingly reinforced effect of an all-purpose antioxidant, which is achieved by adding a small amount of the 6-hydroxychroman compound of formula (1) to a phenolic or phosphorus antioxidant widely used. For example, a small amount of the 6-hydroxychroman compound is used along with at least one all-purpose antioxidant selected from phenolic antioxidants and phosphorus antioxidants, whereby not only heat resistance but also stability during processing has been found to markedly improve.

The organic polymer to be stabilized by the inventive stabilizer composition is exemplified by synthetic organic polymer and natural organic polymer.

The synthetic organic polymer is exemplified by resin such as thermoplastic resin, thermosetting resin and the like.

The thermoplastic resin is exemplified by olefin resin, halogen-containing polymer, styrene resin, acrylic resin, thermoplastic polyester resin, polyamide resin, aromatic polycarbonate resin, polyacetal resin, polyethylene oxide resin, polyphenylene ether resin, polysulfone resin, polyurethane resin, petroleum resin, polyvinyl acetate resin, vinyl acetal resin, cellulose resin, polyether sulfone resin, polyphenylene sulfide resin, polyether ketone resin, polyether imide resin, polyoxybenzoyl resin, polyimide resin, polymaleimide resin, polyamide-imide resin, polyarylate resin, fluororesin, ionomer, thermoplastic elastomer and the like, and mixtures thereof.

The aforementioned olefin resin is exemplified by homopolymer of α-olefin having 2-8 carbon atoms (e.g., low density polyethylene, linear low density polyethylene, medium density polyethylene, high density polyethylene, ultra high molecular weight polyethylene, polypropylene, polybutene-1, polypentene, poly-3-methylbutylene and the like); α-olefin copolymer (e.g., ethylene-propylene random copolymer, ethylene-propylene block copolymer, ethylene-butene-1 random copolymer, propylene-ethylene-butene-1 random copolymer and the like); copolymer of α-olefin and other monomer (e.g., maleic anhydride modified polypropylene, ethylene-vinyl acetate copolymer and the like), and the like. Two or more kinds thereof or a mixture of these and other compatible polymer may be used.

These olefin resins may be one obtained by removing a catalyst residue after polymerization and thus somewhat purified, one obtained by relatively high purification, olefin resin containing a catalyst residue which is obtained by using a highly active catalyst but without a catalyst removal step or with a simplified catalyst removal step, or particularly crystalline olefin resin obtained by using a Ziegler catalyst using a halogen-containing magnesium compound as a catalyst carrier or a chromium catalyst and without a catalyst residue removal step (see JP-B-62-4418 and 3-56245, U.S. Patent No. 4115639). In addition, it may be an olefin resin having a very narrow molecular weight distribution which is obtained by the use of a metallocene single site catalyst (Journal of Polymer Science. Polymer Chemistry Edition, Vol. 23, p. 2151 (1985)).

The above-mentioned halogen-containing polymer is, for example, polyvinyl chloride, polyvinylidene chloride, polyvinyl fluoride, polyvinylidene fluoride, vinyl chloride-acrylic acid alkyl ester copolymer, chlorinated polyethylene and the like.

The above-mentioned styrene resin is, for example, polystyrene, high-impact polystyrene, styrene-acrylonitrile copolymer, styrene-MMA copolymer, ABS resin, AES resin, ACS resin, AAS resin, EES resin and the like, and mixtures thereof and the like.

The above-mentioned acrylic resin is, for example, polyacrylate, polymethacrylate and the like.

The above-mentioned thermoplastic polyester resin is, for example, polyethylene terephthalate, polybutylene terephthalate and the like.

The above-mentioned polyamide resin is, for example, nylon 4, nylon 6, nylon 4/6, nylon6/6, nylon 6/10, nylon 7, nylon 8, nylon 12, nylon 6/12, nylon 11/12, aramid and the like, mixtures of these and the like.

The thermosetting resin is, for example, unsaturated polyester resin, phenol resin, urea resin, melamine resin, epoxy resin, polyimide resin, silicone resin, diallyl phthalate resin, polyurethane resin, furan resin and the like.

In addition, the natural organic polymer is, for example, a natural gum, a protein, a derivative of a cellulose and the like, mineral oil, animal or vegetable oil, wax, fats and oils and the like.

The organic polymer to be used for the inventive stabilized organic polymer material composition is particularly olefin resin, more particularly an α-olefin homopolymer or an α-olefin copolymer. When a stabilizer composition of the present invention is added to such organic polymer, a superior antioxidant effect can be achieved. The most preferable α-olefin is polypropylene or polyethylene.

The 6-hydroxychroman compound of the formula (1) to be used in the present invention can be synthesized according to the method described in JP-B-45-23146.

The content of 6-hydroxychroman compound of the formula (1) of the organic polymer material composition of the present invention is 0.0005 part by weight - 0.025 part by weight, preferably 0.001 part by weight - 0.02 part by weight, more preferably 0.001 part by weight - 0.005 part by weight, per 100 parts by weight of the total amount of (a) a 6-hydroxychroman compound of the formula (1), (b) at least one member selected from phenolic antioxidants and phosphorus antioxidants, and (c) an organic polymer.

The total amount of (a) 6-hydroxychroman compound of the formula (1) and (b) at least one member selected from phenolic antioxidants and phosphorus antioxidants in the organic polymer material composition of the present invention is 0.01 part by weight - 1 part by weight, preferably 0.02 part by weight - 0.2 part by weight, per 100 parts by weight of the total amount of the component (a), the component (b), and (c) the organic polymer. By setting the total amount to fall within the range of 0.01 part by weight - 1 part by weight, an organic polymer material that is hardly colored and that shows superior stability during processing can be obtained.

The proportions of the component (a) the 6-hydroxychroman compound of the formula (1) and (b) at least one member selected from phenolic antioxidants and phosphorus antioxidants, relative to the total amount of the components (a) and (b), is 1 wt% - 20 wt%, preferably 1 wt% - 6.5 wt%, more preferably 1 wt% - 4.5 wt%, of the component (a) and 99 wt% - 80 wt%, preferably 99 wt% - 93.5 wt%, more preferably 99 wt% - 95.5 wt%, of (b). When the proportion of the 6-hydroxychroman compound is within the above-mentioned range, an organic polymer material that is hardly colored and that shows superior stability during processing can be obtained.

In the present invention, a phenolic antioxidant and a phosphorus antioxidant are preferably used in combination as the component (b). While the weight ratio of the added amounts of the phenolic antioxidant and the phosphorus antioxidant may be optional, it is preferably 1:0.25 - 1:4, more preferably 1:0.3 - 1:3. When the weight ratio is within this range, an organic polymer material superior in coloring preventive function and that shows superior stability during processing can be obtained.

Specific examples of the phenolic antioxidant include, but not limited to:
n-octadecyl 3-(3,5-di-tert-butyl-4-hydroxyphenyl)propionate, tetrakis[3-(3,5-di-tert-butyl-4-hydroxyphenyl)-propionyloxymethyl]methane,
1,3,5-tris(3,5-di-tert-butyl-4-hydroxybenzyl) isocyanurate,
1,3,5-trimethyl-2,4,6-tris(3,5-di-tert-butyl-4-hydroxybenzyl)-benzene,
1,1,3-tris[2-methyl-4-[3-(3,5-di-tert-butyl-4-hydroxyphenyl)-propionyloxy]-5-tert-butylphenyl]butane,
2,5,7,8-tetramethyl-2(4',8',12'-trimethyltridecyl)chroman-6-ol,
2,4-bis[(octylthio)methyl]-o-cresol,
bis(3-tert-butyl-4-hydroxy-5-methylphenyl)dicyclopentadiene,
1,3,5-tris(4-tert-butyl-3-hydroxy-2,6-dimethylbenzyl) isocyanurate,
3,9-bis[2-[3-(3-tert-butyl-4-hydroxy-5-methylphenyl)-propionyloxy]-1,1-dimethylethyl]-2,4,8,10-tetraoxaspiro[5.5]undecane,
2,6-di-tert-butyl-4-methylphenol,
2,4-dimethyl-6-tert-butylphenol,
2,6-di-tert-butyl-4-hydroxymethylphenol,
2,6-di-tert-butyl-4-ethylphenol,
2,4,6-tri-tert-butylphenol,
butylated hydroxyanisole,
isooctyl 3-(4-hydroxy-3,5-di-tert-butylphenyl)propionate,
distearyl (4-hydroxy-3-methyl-5-tert-butyl)benzylmalonate,
propyl gallate,
octyl gallate,
dodecyl gallate,
2,2'-methylenebis(4-methyl-6-tert-butylphenol),
2,2'-methylenebis(4-ethyl-6-tent-butylphenol),
4,4'-methylenebis(2,6-di-tert-butylphenol),
2,2'-butylidenebis(4-ethyl-6-tert-butylphenol),
4,4'-butylidenebis(3-methyl-6-tert-butylphenol),
2,2'-thiobis(4-methyl-6-tert-butylphenol),
4,4'-thiobis(3-methyl-6-tert-butylphenol),
styrenated phenol,
N,N'-hexamethylenebis(3,5-di-tert-butyl-4-hydroxyhydrocynnamide),
calcium bis(ethyl 3,5-di-tert-butyl-4-hydroxybenzylphosphonate),
1,1,3-tris(2-methyl-4-hydroxy-5-tert-butylphenyl)butane,
1,6-hexanediol-bis[3-(3,5-di-tert-butyl-4-hydroxyphenyl)-propionate],
2,2'-methylenebis(4-methyl-6-cyclohexylphenol),
2,2'-methylenebis(6-(1-methylcyclohexyl)-4-methylphenol], triethylene glycol-bis[3-(3-tert-btuyl-4-hydroxy-5-methylphenyl)propionate],
ethylene glycol-bis(3,3-bis(3-tert-butyl-4-hydroxyphenyl)-butyrate),
2-tert-butyl-6-(3-tert-butyl-5-methyl-2-hydroxybenzyl)-4-methylphenyl acrylate,
2,2'-oxamido-bis[ethyl 3-(3,5-di-tert-butyl-4-hydroxyphenyl)-propionate],
6-(4-hydroxy-3,5-di-tert-butylanilino)-2,4-dioctylthio-1,3,5-triazine,
bis[2-tert-butyl-4-methyl-6-(2-hydroxy-3-tert-butyl-5-methylbenzyl)phenyl] terephthalate,
3,9-bis[2-(3-(3,5-di-tert-butyl-4-hydroxyphenyl)propionyloxy]-1,1-dimethylethyl]-2,4,8,10-tetraoxaspiro[5.5]undecane,
1,3,5-tris[3-(3,5-di-tert-butyl-4-hydroxyphenyl)propionyloxy]-ethyl isocyanate,
2,2-thiodiethylene-bis[3-(3,5-di-tert-butyl-4-hydroxyphenyl)-propionate],
2-[1-(2-hydroxy-3,5-di-tert-pentylphenyl)ethyl]-4,6-di-tert-pentylphenyl acrylate and the like.

Preferable phenolic antioxidant is exemplified by:
n-octadecyl 3-(3,5-di-tert-butyl-4-hydroxyphenyl)propionate, tetrakis[3-(3,5-di-tert-butyl-4-hydroxyphenyl)-propionyloxymethyl]methane,
1,3,5-tris(3,5-di-tert-butyl-4-hydroxybenzyl) isocyanurate,
1,3,5-trimethyl-2,4,6-tris(3,5-di-tert-butyl-4-hydroxybenzyl)-benzene,
1,1,3-tris[2-methyl-4-[3-(3,5-di-tert-butyl-4-hydroxyphenyl)-propionyloxy]-5-tert-butylphenyl]butane,
2,5,7,8-tetramethyl-2(4'8'12'-trimethyltridecyl)chroman-6-ol, 2,4-bis[(octylthio)methyl]-o-cresol,
bis(3-tert-butyl-4-hydroxy-5-methylphenyl)dicyclopentadiene, 1,3,5-tris(4-tert-butyl-3-hydroxy-2,6-dimethylbenzyl) isocyanurate,
3,9-bis[2-[3-(3-tert-butyl-4-hydroxy-5-methylphenyl)propionyloxy]-1,1-dimethylethyl]-2,4,8,10-tetraoxaspiro[5.5]undecane and the like.

Particularly preferable phenolic antioxidant is exemplified by, but not limited to
n-octadecyl 3-(3,5-di-tert-butyl-4-hydroxyphenyl)propionate, tetrakis[3-(3,5-di-tert-butyl-4-hydroxyphenyl)-propionyloxymethyl]methane,
1,3,5-tris(3,5-di-tert-butyl-4-hydroxybenzyl) isocyanurate,
1,3,5-trimethyl-2,4,6-tris(3,5-di-tert-butyl-4-hydroxybenzyl)benzene and the like.

According to the present invention, one or more kinds of these phenolic antioxidants can be used in combination.

Preferable phosphorus antioxidant includes
tris(2,4-di-tert-butylphenyl) phosphite,
tetrakis(2,4-di-tert-butylphenyl)-4,4'-biphenylenediphosphonite, tetrakis(2,4-di-tert-butyl-5-methylphenyl)-4,4'-biphenylenediphosphonite,
bis(2,4-di-tert-butylphenyl) pentaerythritol diphosphite,
bis(2,6-di-tert-butyl-4-methylphenyl) pentaerythritol diphosphite,
2,2'-methylenebis(4,6-di-tert-butylphenyl)-2-ethylhexyl phosphite,
bis[2-methyl-4,6-bis(1,1-dimethylethyl)phenyl] ethyl phosphite,
2,2',2"-nitrilo[triethyltris(3,3',5,5'-tetra-tert-butyl-1,1'-biphenyl-2,2'-diyl)phosphite],
2,2-ethylidene-bis(4,6-di-tert-butylphenyl)fluorophosphonite,
2,10-dimethyl-4,8-di-tert-butyl-6-(2-[3-(3-tert-butyl-4-hydroxy-5-methylphenyl)propionyloxy]ethoxy}-12H-dibenzo[d,g][1,3,2]-dioxaphosphocin,
bis[2,4-bis(α,α-dimethylbenzyl)phenyl] pentaerythrithol phosphite,
(2,4,6-tri-tert-butylphenyl)-2-butyl-2-ethyl-1,3-propanediol phosphite,
distearyl pentaerythrithol diphosphite,
hexatridecyl 1,1,3-tris(2-methyl-4-hydroxy-5-tert-butylphenyl)-butanetriphosphite and the like.

Preferable phosphorus antioxidant includes:
tris(2,4-di-tert-butylphenyl) phosphite,
tetrakis(2,4-di-tert-butylphenyl)-4,4'-biphenylenediphosphonite,
tetrakis(2,4-di-tert-butyl-5-methylphenyl)-4,4'-biphenylenediphosphonite,
bis(2,4-di-tert-butylphenyl) pentaerythritol diphosphite,
bis(2,6-di-tert-butyl-4-methylphenyl) pentaerythritol diphosphite,
2,2'-mathylenebis(4,6-di-tert-butylphenyl)-2-ethylhexyl phosphite,
bis[2-methyl-4,6-bis(1,1-dimethylethyl)phenyl] ethyl phosphite,
2,2',2"-nitrilo[triethyltris(3,3',5,5'-tetra-tert-butyl-1,1'-biphenyl-2,2'-diyl)phosphite],
2,2-ethylidene-bis(4,6-di-tert-butylphenyl)fluorophosphonite,
2,10-dimethyl-4,8-di-tert-butyl-6-{2-[3-(3-tert-butyl-4-hydroxy-5-methylphenyl)propionyloxy]ethoxy}-12H-dibenzo[d,g][1,3,2]-dioxaphosphocin,
bis[2,4-bis(α,α-dimethylbenzyl)phenyl] pentaerythrithol phosphite,
(2,4,6-tri-tert-butylphenyl)-2-butyl-2-ethyl-1,3-propanediol phosphite and the like.

Particularly preferable phosphorus antioxidant includes:
tris(2,4-di-tert-butylphenyl) phosphite;
tetrakis(2,4-di-tert-butylphenyl)-4,4'-biphenylenediphosphonite,
tetrakis(2,4-di-tert-butyl-5-methylphenyl)-4,4'-biphenylenediphosphonite,
bis(2,4-di-tert-butylphenyl) pentaerythritol diphosphite,
bis(2,6-di-tert-butyl-4-methylphenyl) pentaerythritol diphosphite,
2,2'-methylenebis(4,6-di-tert-butylphenyl)-2-ethylhexyl phosphite,
bis[2-methyl-4,6-bis(1,1-dimethylethyl)phenyl] ethyl phosphite and
2,2',2"-nitrilo[triethyltris(3,3',5,5'-tetra-tert-butyl-1,1'-biphenyl-2,2'-diyl)phosphite].

According to the present invention, one or more of these phosphorus antioxidants can be used.

By further adding a sulfur antioxidant to the stabilized organic polymer material composition of the present invention, an organic polymer material having more superior stability can be obtained.

The sulfur antioxidant is not particularly limited but preferred are:
dilauryl thiodipropionate,
laryl stearyl thiodipropionate,
dimyristyl thiodipropionate,
distearyl thiodipropionate,
ditridecyl thiodipropionate,
tetrakis[(3-laurylthiopropionyloxy)methyl]methane,
tetrakis[(3-stearylthiopropionyloxy)methyl]methane,
bis[2-methyl-4-(3-n-alkyl(C12 - C14)thiopropionyloxy)-5-tert-butylphenyl]sulfide and the like.

The organic polymer material composition of the present invention can contain one or more sulfur antioxidants. The sulfur antioxidant can be added to an organic polymer material composition in an amount of preferably 0.005 part by weight - 5 parts by weight, more preferably 0.01 part by weight - 1 part by weight, per 100 parts by weight of the composition. When two or more kinds of the sulfur antioxidants are used, the total amount preferably falls within the above-mentioned range.

By further adding an ultraviolet absorber and a light stabilizer to the stabilized organic polymer material composition of the present invention, a more stabilized organic polymer material can be obtained.

Examples of the ultraviolet absorber and light stabilizer include salicylic acid compound, benzophenone compound, benzotriazole compound, benzoate compound, cyanoacrylate compound, nickel compound, piperidine compound and the like.

Examples of the salicylic acid compound that can be used as an ultraviolet absorber include:
phenyl salicylate,
p-tert-butylphenyl salicylate,
p-octylphenyl salicylate and the like.

Examples of the benzophenone compound that can be used as an ultraviolet absorber include compounds such as:
2,4-dihydroxybenzophenone,
2-hydroxy-4-methoxybenzophenone,
2,2'-dihydroxy-4,4'-dimethoxybenzophenone,
2-hydroxy-4-n-octyloxybenzophenone,
2-hydroxy-4-isooctyloxybenzophenone,
2-hydroxy-4-dodecyloxybenzophenone,
2-hydroxy-4-octadecyloxybenzophenone,
2-hydroxy-4-methoxy-2'-carboxybenzophenone,
bis(5-benzoyl-4-hydroxy-2-methoxyphenyl)methane,
2-hydroxy-4-methoxy-5-sulfobenzophenone trihydrate,
2,2',4,4'-tetrahydroxybenzophenone,
2-hydroxy-4-benzoyloxybenzophenone and the like.

Examples of the benzotriazole compound that can be used as an ultraviolet absorber include compounds such as:
2-(2-hydroxy-5-methylphenyl)benzotriazole,
2-(2-hydroxy-3,5-di-tert-butylphenyl)benzotriazole,
2-(2-hydroxy-3-tert-butyl-5-methylphenyl)-5-chlrolobenzotriazole,
2-(2-hydroxy-3,5-di-tert-butylphenyl)-5-chlorobenzotriazole,
2-[2-hydroxy-5-(1,1,3,3-tetramethylbutyl)phenyl)benzotriazole,
2-[2-hydroxy-3,5-bis(α,α-dimethylbenzyl)phenyl]-2H-benzotriazole,
condensate of methyl 3-[3-tert-butyl-5-(2H-benzotriazol-2-yl)-4-hydroxyphenyl]propionate and polyethylene glycol,
2-(2-hydroxy-3,5-di-tert-amylphenyl)benzotriazole,
2,2-methylenebis[4-(1,1,3,3-tetramethylbutyl)-6-(2H-benzotriazol-2-yl)phenol],
2-(2-hydroxy-5-tert-octylphenyl)benzotriazole,
2-[2-hydroxy-3-(3,4,5,6-tetrahydrophthalimidomethyl)-5-methylphenyl)benzotriazole and the like.

Examples of the benzoate compound that can be used as a light stabilizer include compounds such as:
n-hexadecyl 3,5-di-tert-butyl-4-hydroxybenzoate,
2,4-di-tert-butylphenyl 3,5-di-tert-butyl-4-hydroxybenzoate and the like.

Examples of the cyanoacrylate compound that can be used as an ultraviolet absorber include compounds such as:
ethyl 2-cyano-3,3-diphenylacrylate,
octyl 2-cyano-3,3-diphenylacrylate and the like.

Examples of the nickel compound that can be used as an ultraviolet absorber include compounds such as:
2-ethylhexylamine nickel,
nickel dimethyldithiocarbamate,
[2,2'-thiobis[4-(1,1,3,3-tetramethylbutyl)phenolate]]-n-butylamine nickel,
[2,2'-thiobis[4-(1,1,3,3-tetramethylbutyl)phenolate]] nickel and the like.

Examples of the piperidine compound that can be used as a light stabilizer include compounds such as:
bis(2,2,6,6-tetramethyl-4-piperidyl) sebacate,
bis(1-octyloxy-2,2,6,6-tetramethyl-4-piperidyl) sebacate,
bis(1,2,2,6,6-pentamethyl-4-piperidyl)-2-(3,5-di-tert-butyl-4-hydroxybenzyl)-2-n-butylmalonate,
tetrakis(2,2,6,6-tetramethyl-4-piperidyl)-1,2,3,4-butanetetracarboxylate,
tetrakis(1,2,2,6,6-pentamethyl-4-piperidyl)-1,2,3,4-butanetetracarboxylate,
poly[[6-(1,1,3,3-tetramethylbutyl)imino-s-triazin-2,4-diyl][(2,2,6,6-tetramethyl-4-piperidyl)imino]hexamethylene-[(2,2,6,6-tetramethyl-4-piperidyl)imino]](cyanuric chloride/tert-octylamine/1,6-bis(2,2,6,6-tetramethyl-4-piperidylamino)hexane condensate),
poly[(6-morpholino-s-triazin-2,4-diyl)[(2,2,6,6-tetramethyl-4-piperidyl)immino]hexamethylene[(2,2,6,6-tetramethyl-4-piperidyl)imino]](cyanuric chloride/morpholine/1,6-bis(2,2,6,6-tetramethyl-4-piperidylamino)hexane condensate),
1-hydroxyethyl-2,2,6,6-tetramethyl-4-piperidinol/succinic acid condensate,
N,N'-bis(3-aminopropyl)ethyldiamine/2,4-bis[N-butyl-N-(1,2,2,6,6-pentamethyl-4-piperidyl)amino]-6-chloro-1,3,5-triazine condensate and the like.

Examples of preferable compound that can be used as an ultraviolet absorber and light stabilizer include compounds such as:
2-hydroxy-4-n-octyloxybenzophenone,
2-(2-hydroxy-5-methylphenyl)benzotriazole,
2-(2-hydroxy-3-tert-butyl-5-methylphenyl)-5-chlorobenzotriazole,
2-(2-hydroxy-3,5-di-tert-butylphenyl)-5-chlorobenzotriazole,
bis(2,2,6,6-tetramethyl-4-piperidyl) sebacate,
poly[[6-(1,1,3,3-tetramethylbutyl)imino-s-triazin-2,4-diyl][(2,2,6,6-tetramethyl-4-piperidyl)imino]hexamethylene-[(2,2,6,6-tetramethyl-4-piperidyl)imino]](cyanuric chloride/tert-octylamine/1,6-bis(2,2,6,6-tetramethyl-4-piperidylamino)hexane condensate) and the like.

The organic polymer material composition of the present invention can contain one or more kinds of ultraviolet absorbers or light stabilizers. The ultraviolet absorber or light stabilizer can be added in an amount of preferably 0.005 part by weight - 5 parts by weight, more preferably 0.01 part by weight - 1 part by weight, per 100 parts by weight of organic polymer material composition. When two or more kinds of ultraviolet absorbers or light stabilizers are used, the total amount thereof is preferably within the above-mentioned range.

A 6-hydroxychroman compound selected from the compounds of the formula (1) of the present invention, at least one member selected from phenolic antioxidants and phosphorus antioxidants, and where necessary, a sulfur antioxidant, an ultraviolet absorber and a light stabilizer are added to an organic polymer to give a more stabilized organic polymer material composition.

Where necessary, one or more kinds of other additives that do not markedly impair the properties of the stabilized organic polymer material composition of the present invention can be used concurrently, such as hydrotalcites, metal soap (e.g., calcium stearate), heavy metal inactivating agent (e.g., hydrazine compound), organic tin stabilizer [e.g., monoalkyltin tris(octyl thioglycolate), dialkyltin bis(octyl thioglycolate), monoalkyltin tris(monoalkyl maleate) and dialkyltin bis(monoalkyl maleate)], epoxy compound (e.g., epoxidized soybean oil and epoxyoctyl stearate), various organic pigments, flame retardant (e.g., phosphate), antistatic agent (e.g., cationic or anionic surfactant), lubricant (e.g., fatty acid amide and lower alcohol esters of fatty acid), acrylic polymer processing aid, plasticizer (e.g., di-2-ethylhexyl phthalate and di-2-ethylhexyl adipate), filler (e.g., aluminum oxide), blowing agent (e.g., sodium bicarbonate and azodicarbonamide) and the like.

The stabilized organic polymer material composition of the present invention can, where necessary, contain crystalline nucleating agent, clarifier and the like.

Examples of the crystalline nucleating agent and clarifier include:
bis(p-tert-butyl benzoate)hydroxyalminum,
sodium bis(4-tert-butylphenyl)phosphate,
sodium 2,2'-methylenebis(4,6-di-tert-butylphenyl)phosphate,
dibenzylidenesorbitol,
bis(p-methylbenzylidene)sorbitol,
bis(p-ethylbenzylidene)sorbitol,
bis(p-chlorobenzylidene)sorbitol and the like.

The method for adding the above-mentioned stabilizer to an organic polymer is not particularly limited, and a conventionally known method can be used. For example, an organic polymer and a stabilizer are mixed, and applied to a step such as kneading, extrusion and the like.

An organic polymer material composition can be prepared by weighing a predetermined amount of the 6-hydroxychroman compound of the present invention, and at least one member selected from the group consisting of a phenolic antioxidant and a phosphorus antioxidant, and where necessary, a sulfur antioxidant, an ultraviolet absorber, alight stabilizer, and other additives and mixing same with an organic polymer. It may be kneaded after mixing. For mixing, a mixer conventionally used for mixing additives with an organic polymer, such as a ball mill, a pebble mill, a tumbling mixer, a change-can mixer, a supermixer (Henschel mixer) and the like can be used. For admixing, a kneader conventionally used for kneading additives with an organic polymer, such as a mixing roll, a Banbury mixer, a Σ blade mixer, a high-speed biaxial continuous mixer, an extruder type kneader and the like can be used.

The organic polymer material composition thus obtained can be formed into a desired product by various molding methods conventionally known for organic polymer material, such as an injection molding method, an extrusion molding method, a calendar molding method, a blow molding method, a compression molding method and the like. The product is free of particular limitation, and may be used outdoor or indoor, which is specifically exemplified by parts of electric appliances, parts of electronic products, parts of agricultural machinery, products for agricultural use, parts of fishery machines, products for fishery use, parts of automobile vehicles, daily needs, sundries and the like. More specifically, coating of steel pipes for high temperature transport of heavy oil, heat pipe (for hot water supply, under floor heating and the like ), parts of household electric appliances such as rice cooker, thermos, washing machine etc., and the like.

### Examples

The present invention is explained in more detail in the following by referring to examples. The present invention is not limited in any way by these examples.

As a fluidity scale, melt index (hereinafter also referred to as MI) is industrially used predominantly. The melt index is used for anticipating an influence, on forming processability, of the progress of degradation by breakage of molecules during heat processing of an organic material and a high molecular weight polymer, such as polypropylene resin and the like, or for indication of standard and quality control.

MI stands for a flow rate in weight (unit: g) for 10 min when a high molecular weight polymer melted at a given temperature is extruded from a circular die having standard length and diameter by applying a certain load, and is used as an index of melt viscosity. Of the high molecular weight polymers, polypropylene having a smaller MI value has better stability during processing, and that having a greater MI value has poor stability during processing. A polymer showing less variation in the values upon repeat measurements of MI is considered to have greater MI retention effect and to be superior in the stability during processing.

When an additive is kneaded into a resin, yellowness index (hereinafter also referred to as YI) is also widely used as a scale for evaluating discoloration. YI is measured by colorimeter, wherein a greater value means greater discoloration or color development and a smaller value means less coloring during processing, and therefore, superiority.

Shown in the following Examples are production example of 2,2,5,7,8-pentamethyl-6-hydroxychroman, evaluation results of stability during processing through measurement of MI and YI using samples obtained by repeat extrusion of strands from an extruder, and evaluation results of stability against heat during use based on the variations in YI measured with time while maintaining samples at a high temperature.

### Synthetic Example 1

### Production Example of 2,2,5,7,8-pentamethyl-6-hydroxychroman

In a 50 ml four-necked flask were charged 2,3,5-trimethylhydroquinone (5.0 g), zinc chloride (0.8 g), acetic acid (0.35 ml), methyl ethyl ketone (4 ml) and toluene (15 ml) and the mixture was heated. At 100°C, a solution of isoprene (2.5 g) in toluene (5 ml) was added dropwise under reflux over 2 hr. After the dropwise addition, the mixture was refluxed for 4 more hours and cooled to room temperature. The reaction mixture was transferred to a partition funnel, and, after washing 3 times with 50 ml of water, the solvent was evaporated to give 6.5 g of an oily substance.

This was recrystallized from petroleum ether (50 ml) to give 2.5 g of needle crystals of 2,2,5,7,8-pentamethyl-6-hydroxychroman (melting point 94 - 95°C).

| Elemental analysis | carbon atom, | hydrogen atom |
|---|---|---|
| Calculated | 76.33% | 9.15% |
| Found | 76.34% | 9.10% |

### Example 1

The mixtures shown in Table 1 were dry mixed for 5 min in a tumbler mixer. A strand was extruded from a 20 mm diameter extruder (die temperature set to 280°C), cooled with water and cut to give pellets. This step was repeated twice. The stability during processing was evaluated by measuring, according to JIS K-7210, melt index (MI) of the pellets extruded each time. The temperature for measurement was 230°C and measurement load was 2.16 kgf. The pellets extruded each time were measured for YI according to JIS K-7103.

The symbols used in Table 1 are as follows:
PP:polypropylene (homopolymer)
Ca-St:calcium stearate
P-1:tris(2,4-di-tert-butylphenyl) phosphite (manufactured by Yoshitomi Fine Chemicals Ltd., trademark: Tomiphos 202)
AO-2:tetrakis[3-(3,5-di-tert-butyl-4-hydroxyphenyl)-propionyloxymethyl]methane (manufactured by Yoshitomi Fine Chemicals Ltd., trademark:Tominox TT)
S-12:2,2,5,7,8-pentamethyl-6-hydroxychroman
MI1: MI value of pellets obtained for the first time.
MI2: MI value of pellets obtained for the second time.
YI1: YI value of pellets obtained for the first time.
YI2: YI value of pellets obtained for the second time.

The following have been found from the results of Table 1.
(1) With regard to MI, by setting the proportion of 6-hydroxychroman compound to the total amount of antioxidants not less than 1 wt%, the stability during processing can be improved, as compared to non-addition of 6-hydroxychroman compound. However, an increase to 15 wt% of the amount of 6-hydroxychroman compound affords almost the same level of results as in the case of 10 wt%, and the increase does not lead to a specific effect. With regard to YI, by setting the proportion of 6-hydroxychroman compound to the total amount of antioxidants not less than 1 wt% and not more than 10 wt%, a coloring preventive effect can be improved as compared to non-addition of 6-hydroxychroman compound. However, when 6-hydroxychroman compound was added in an amount of 15 wt%, the results were almost at the same level as in the case of non-addition of 6-hydroxychroman compound.
(2) Therefore, the proportion of 6-hydroxychroman compound to the total amount of antioxidants is preferably 1 wt% - 10 wt%. It has been found that, at this level, an organic polymer material composition that is hardly colored and that has a strikingly improved stability during processing can be obtained.

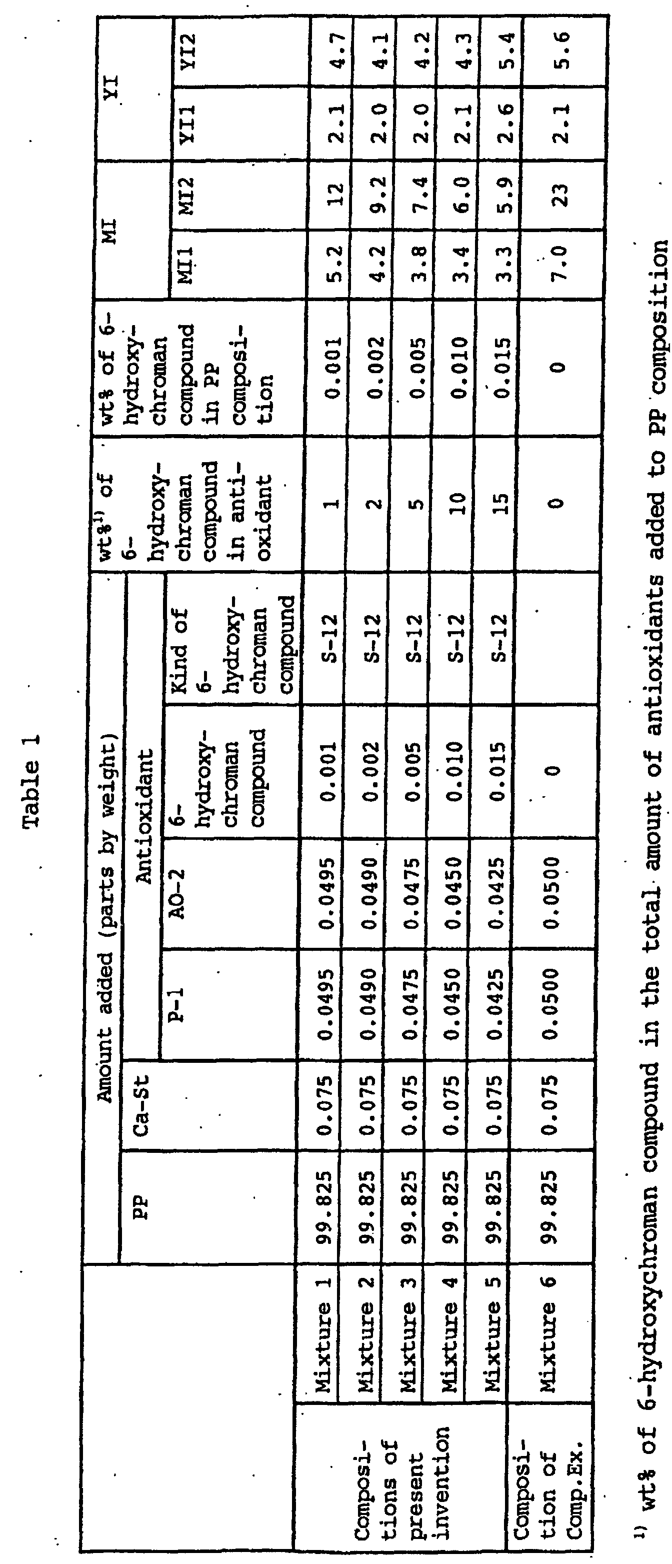

### Example 2

As a fluidity scale of a high molecular weight material, MI is generally measured. As to a material such as polyethylene resin associated with the progress of degradation by both molecular crosslinking and breakage of molecules due to thermal hysteresis (heat history), however, a single evaluation of MI is not sufficient to know the degree of degradation. For this reason, an industrially spread method is to use the start time of torque change as an index of stabilization, which is obtained by tracing the torque pattern during kneading using a Labo Plastomill. By this test method, a linear low density polyethylene (LLDPE) was evaluated for stability and the results are shown in Table 2. A longer time before the torque starts increasing (hereinafter to be referred to as torque increase start time) means fine thermal stability during processing.

The mixtures shown in Table 2 were accurately weighed and mixed in beakers. Using Labo Plastomill (type 50C-150, manufactured by TOYOSEIKI CORPORATION), the torque increase start time was measured by mixing at 210°C, 60 rpm.

The symbols used in Table 2 are as follows:
LLDPE: linear low density polyethylene
P-1:tris(2,4-di-tert-butylphenyl) phosphite (manufactured by Yoshitomi Fine Chemicals Ltd., trademark: Tomiphos 202)
AO-1:n-octadecyl 3-(3,5-di-tert-butyl-4-hydroxyphenyl)propionate (manufactured by Yoshitomi Fine Chemicals Ltd., trademark:Tominox SS)
5-2:2,2, 5-trimethyl-7-tert-butyl-6-hydroxychroman

The following have been found from the results of Table 2.

When the proportion of 6-hydroxychroman compound in the linear low density polyethylene composition was 0.0005 wt% - 0.025 wt% (Mixtures 3 - 9), the thermal stability during processing could be improved markedly. However, by the addition of an amount exceeding 0.025 wt% of 6-hydroxychroman compound (Mixture 10), no more effect is promising. The addition of an amount less than 0.0005 wt% of 6-hydroxychroman compound (Mixture 2) did not bring about difference from non-addition of 6-hydroxychroman compound (Mixture 1).

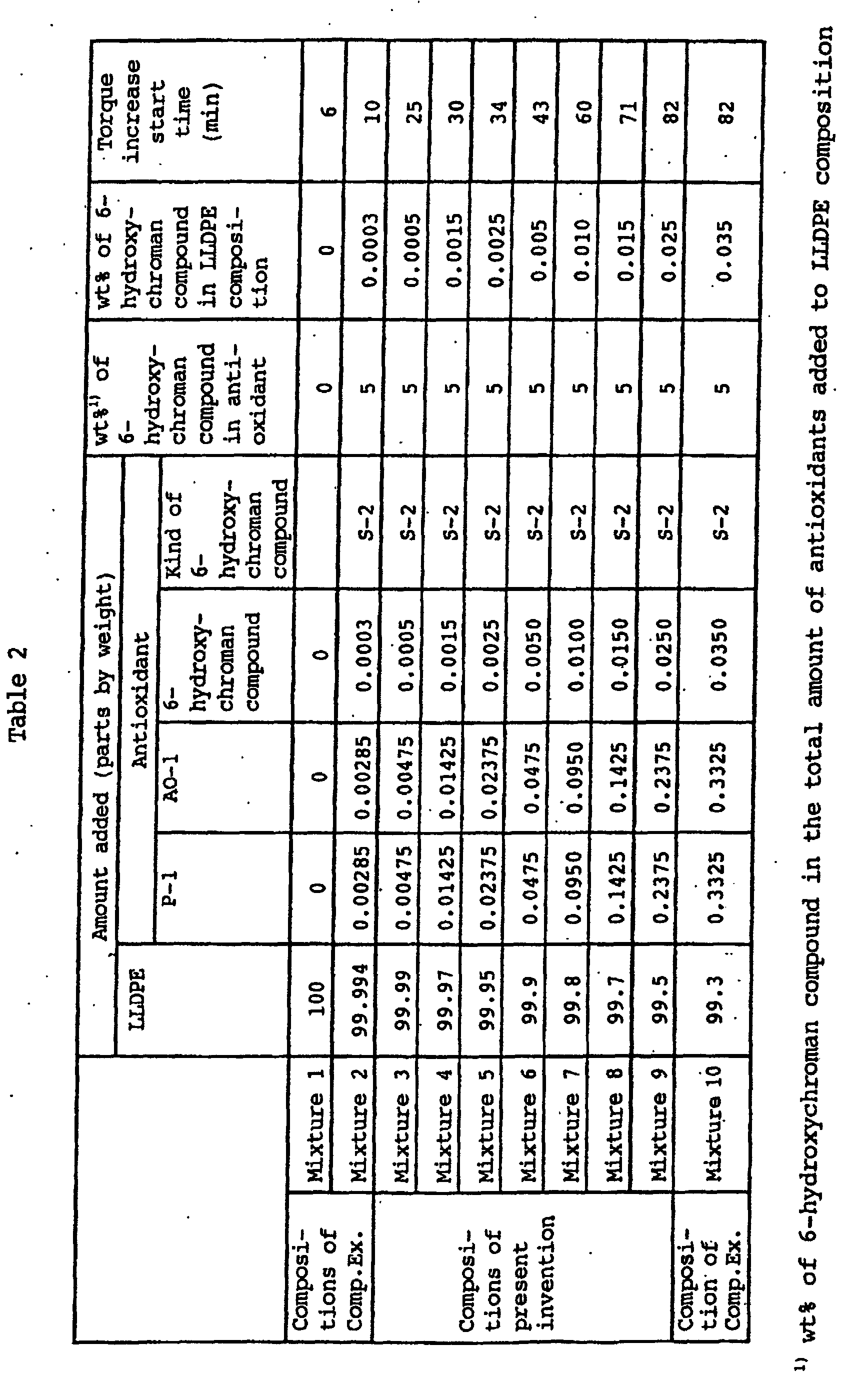

### Example 3

The Mixtures shown in Table 3 were dry-mixed for 5 min in a tumbler mixer and extruded from a 20 mm diameter extruder (die temperature set to 280°C) to give strands, which were cooled with water and cut into pellets. This step was repeated 4 times. The stability during processing was evaluated by measuring, according to JIS K-7210, MI of the pellets extruded each time. The temperature for measurement was 230°C and measurement load was 2.16 kgf. For Mixture 5 and Mixture 7 of Comparative Examples, the following benzofuranone compound (S-10) was used instead of 6-hydroxychroman compound.

The symbols used in Table 3 are explained below.
PP:polypropylene (homopolymer)
Ca-St:calcium stearate
P-1:tris(2,4-di-tert-butylphenyl) phosphite (manufactured by Yoshitomi Fine Chemicals Ltd., trademark: Tomiphos 202)
AO-2:tetrakis[3-(3,5-di-tert-butyl-4-hydroxyphenyl)propionyloxymethyl]methane (manufactured by Yoshitomi Fine Chemicals Ltd., trademark:Tominox TT)
AO-3:2,6-di-tert-butyl-4-methylphenol (manufactured by Yoshitomi Fine Chemicals Ltd., trademark:Yoshinox BHT)
S-2:2,2,5-trimethyl-7-tert-butyl-6-hydroxychroman
S-12:2,2,5,7,8-pentamethyl-6-hydroxychroman
S-10:3-(3,4-dimethylphenyl)-5,7-di-tert-butyl-3H-benzofuran-2-one (synthesized according to the method described in JP-A-7-233160)
MI1: MI value of pellets obtained for the first time.
MI2: MI value of pellets obtained for the second time.
MI3: MI value of pellets obtained for the third time.
MI4: MI value of pellets obtained for the fourth time.
X: means that the resin was degraded and pellets could not be obtained after extrusion of strands.

From Table 3, it is evident that the compositions of the present invention are extremely fine in the stability during processing of repeat extrusion in the following comparisons, as compared to the compositions of Comparative Examples.
Comparison (A) : the present invention composition Mixtures 1, 2 and Comparative Example composition Mixture 5
Comparison (B): the present invention composition Mixture 3 and Comparative Example composition Mixtures 6, 7, 8
Comparison (C): the present invention composition Mixture 4 and Comparative Example composition Mixtures 9, 10, 11

The compositions (Mixtures 1, 2) of the present invention containing 6-hydroxychroman compound (S-2 or S-12) were superior in stability during processing as compared to Comparative Example composition (Mixture 5) containing the same amount of benzofuranone compound (S-10).

The composition (Mixture 3) of the present invention containing a phenolic antioxidant (AO-2) and a 6-hydroxychroman compound (S-12) as a synergist was superior in stability during processing as compared to Comparative Example compositions (Mixtures 6, 7) containing a phenolic antioxidant (AO-3) or a benzofuranone compound (S-10) as a synergist. The composition (Mixture 3) of the present invention was superior in stability during processing as compared to Comparative Example composition (Mixture 8) containing a two-fold amount of AO-2.

The composition (Mixture 4) of the present invention containing a phenolic antioxidant (AO-3) and a 6-hydroxychroman compound (S-12) as a synergist was superior in stability during processing as compared to Comparative Example composition (Mixture 9) which did not contain 6-hydroxychroman compound. The composition (Mixture 4) of the present invention was superior in stability during processing as compared to Comparative Example compositions (Mixtures 10, 11) containing a two-fold or three-fold amount of AO-3.

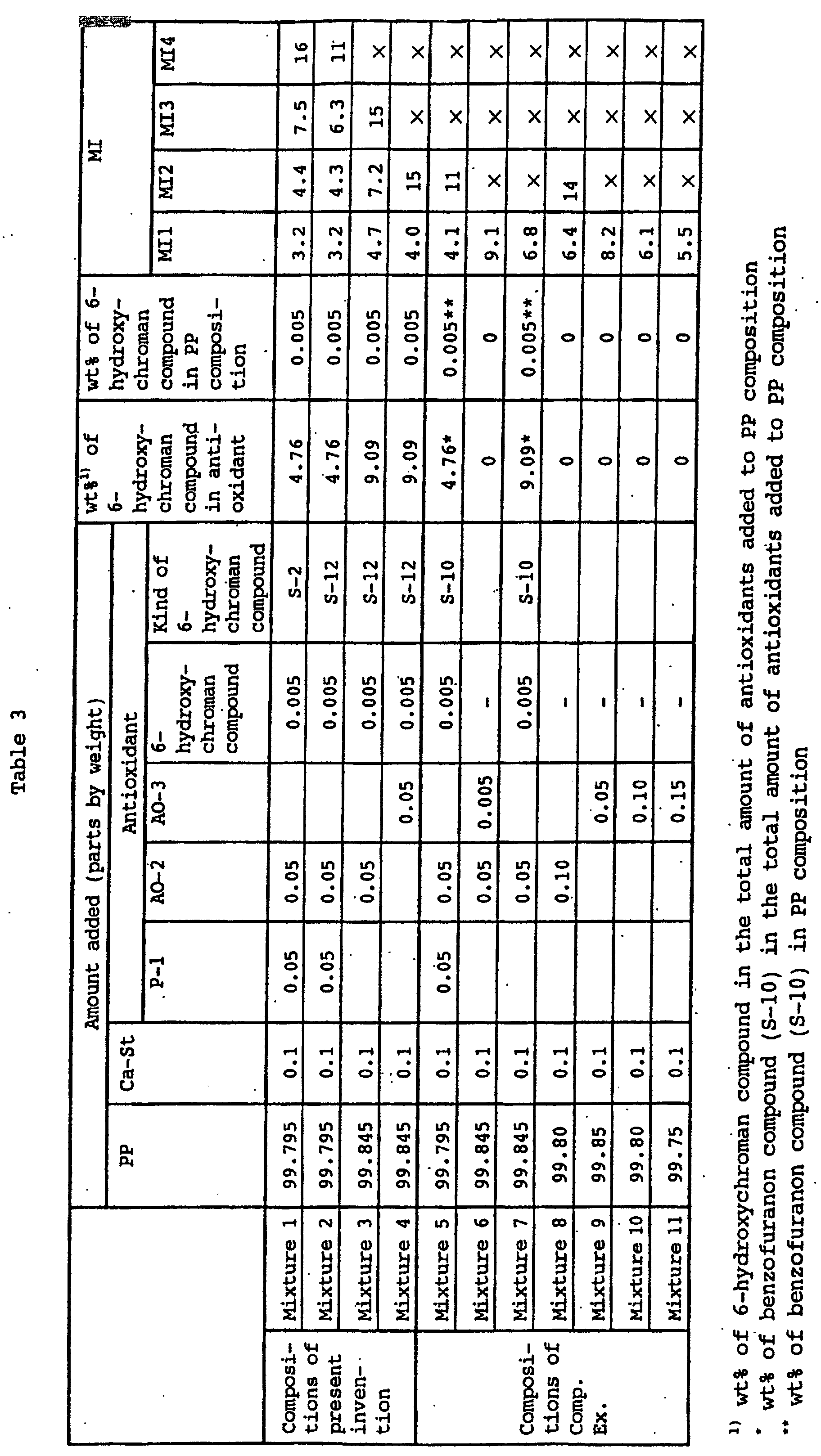

### Example 4

EVA (ethylene-vinyl acetate copolymer) was mixed in a beaker according to the compositions shown in Table 4. Using Labo Plastomill (type 50C-150, manufactured by TOYOSEIKI CORPORATION), the torque increase start time was measured by mixing at 210°C, 50 rpm. For Mixture 2 and Mixture 3 in Comparative Examples, the following benzofuranone compound (S-10) was used instead of 6-hydroxychroman compound.

The symbols used in Table 4 are explained below:
EVA:ethylene-vinyl acetate copolymer
P-1:tris(2,4-di-tert-butylphenyl) phosphite (manufactured by Yoshitomi Fine Chemicals Ltd., trademark: Tomiphos 202)
AO-1:n-octadecyl 3-(3,5-di-tert-butyl-4-hydroxyphenyl)propionate (manufactured by Yoshitomi Fine Chemicals Ltd., trademark:Tominox SS)
S-12:2,2,5,7,8-pentamethyl-6-hydroxychroman
S-10:3-(3,4-dimethylphenyl)-5,7-di-tert-butyl-3H-benzofuran-2-one (synthesized according to the method described in JP-A-7-233160)

From Table 4, it is evident that the composition (Mixture 1) of the present invention containing 6-hydroxychroman compound was extremely superior in thermal stability during processing using Labo Plastomill as compared to the composition (Comparative Example Mixture 2) containing the same amount of 3-(3,4-dimethylphenyl)-5,7-di-tert-butyl-3H-benzofuran-2-one (S-10), the composition (Comparative Example Mixture 3) containing a three-fold amount of S-10 and the composition (Comparative Example Mixture 4) without 6-hydroxychroman compound.

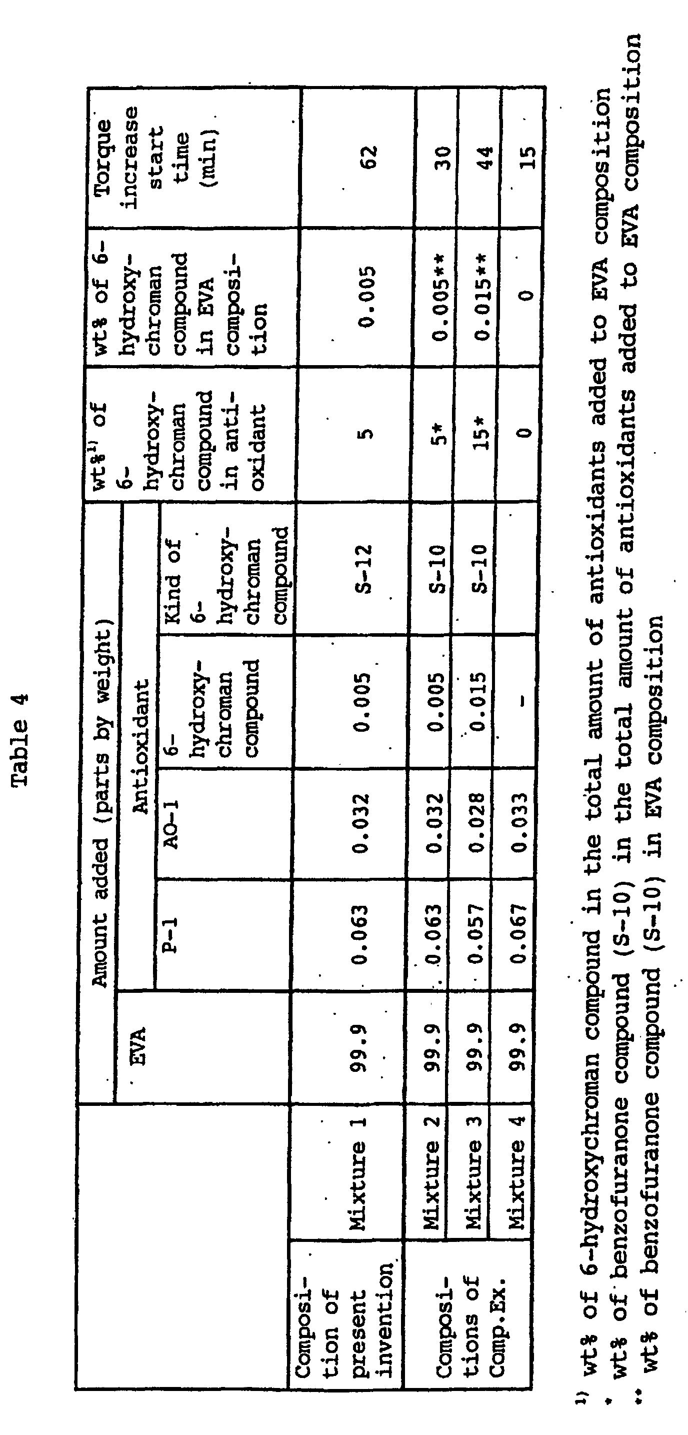

### Example 5

The Mixtures shown in Table 5 were dry-mixed for 5 min in a tumbler mixer and extruded from a 20 mm diameter extruder (die temperature set to 280°C) to give strands, which were cooled with water and cut into pellets. This step was repeated 3 times. The stability during processing was evaluated by measuring, according to JIS K-7210, MI of the pellets extruded each time. The temperature for measurement was 230°C and measurement load was 2.16 kgf. For Mixture 2 of Comparative Example, the following benzofuranone compound (S-10) was used instead of 6-hydroxychroman compound.

The symbols used in Table 5 are explained below:
PP:polypropylene (homopolymer)
Ca-St:calcium stearate
P-2: tetrakis(2,4-di-tert-butyl-5-methylphenyl)-4,4'-biphenylenediphosphonite (manufactured by Yoshitomi Fine Chemicals Ltd., trademark:GSY-P101)
AO-2:tetrakis[3-(3,5-di-tert-butyl-4-hydroxyphenyl)-propionyloxymethyl]methane (manufactured by Yoshitomi Fine Chemicals Ltd., trademark:Tominox TT)
S-12:2,2,5,7,8-pentamethyl-6-hydroxychroman
S-10:3-(3,4-dimethylphenyl)-5,7-di-tert-butyl-3H-benzofuran-2-one (synthesized according to the method described in JP-A-7-233160)
MI1: MI value of pellets obtained for the first time.
MI2: MI value of pellets obtained for the second time.
MI3: MI value of pellets obtained for the third time.
X: means that the resin was degraded and pellets could not be obtained after extrusion of strands.

From Table 5, it is evident that the composition (Mixture 1) of the present invention containing 6-hydroxychroman compound was extremely fine in the stability during processing, as compared to the composition (Comparative Example Mixture 2) containing 3-(3,4-dimethylphenyl)-5,7-di-tert-butyl-3H-benzofuran-2-one (S-10) and the composition (Comparative Example Mixture 3) without 6-hydroxychroman compound.

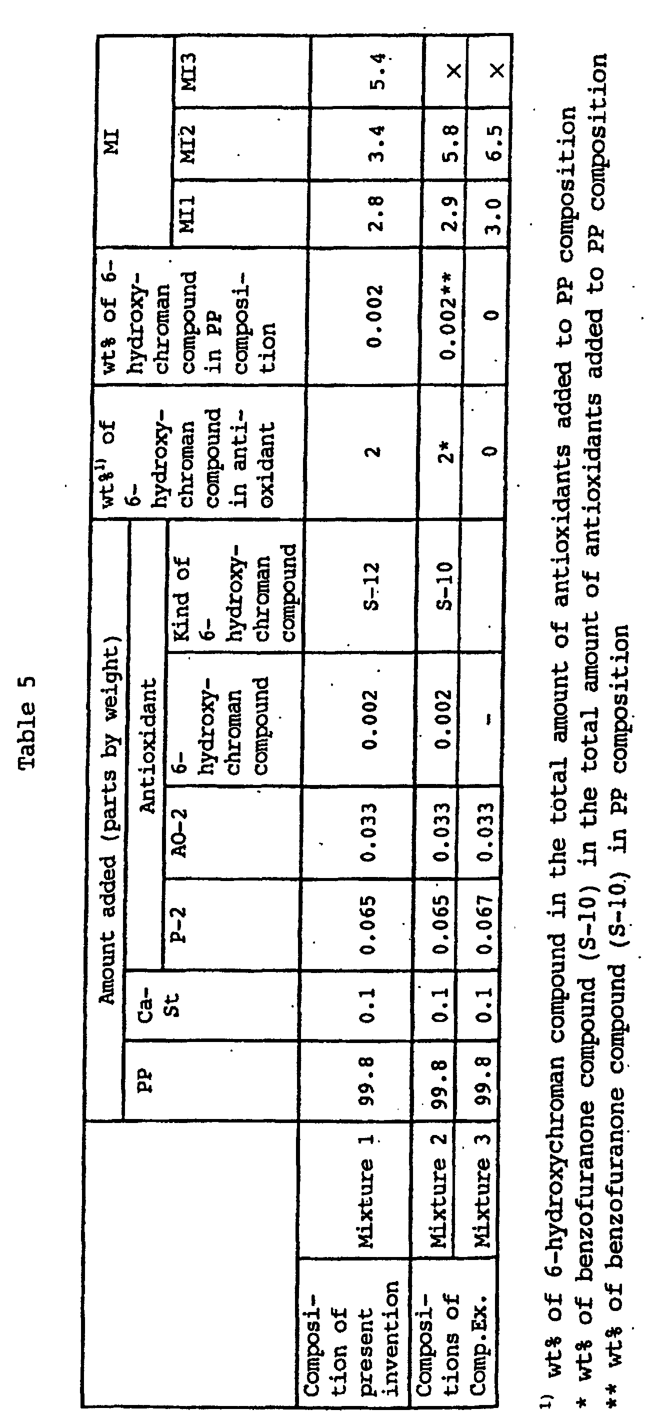

### Example 6

The Mixtures shown in Table 6 were dry-mixed for 5 min in a tumbler mixer and extruded from a 20 mm diameter extruder (die temperature set to 280°C) to give strands, which were cooled with water and cut into pellets. This step was repeated 3 times. The stability during processing was evaluated by measuring, according to JIS K-7210, MI of the pellets extruded each time. The temperature for measurement was 230°C and measurement load was 2.16 kgf.

The symbols used in Table 6 are explained below:
PP:polypropylene (homopolymer)
Ca-St:calcium stearate
P-3:tetrakis(2,4-di-tert-butylphenyl)-4,4'-biphenylenediphosphonite (manufactured by Clariant, trademark:Sandostab P-EPQ)
AO-2:tetrakis[3-(3,5-di-tert-butyl-4-hydroxyphenyl)-propionyloxymethyl]methane (manufactured by Yoshitomi Fine Chemicals Ltd., trademark:Tominox TT)
AO-4:1,3,5-tris(3,5-di-tert-butyl-4-hydroxybenzyl)isocyanurate (manufactured by Yoshitomi Fine Chemicals Ltd., trademark:Yoshinox 314)
AO-5:1,3,5-trimethyl-2,4,6-tris(3,5-di-tert-butyl-4-hydroxybenzyl)benzene (manufactured by Ciba Speciality Chemicals, trademark:Irganox 1330)
S-2:2,2,5-trimethyl-7-tert-butyl-6-hydroxychroman
MI1: MI value of pellets obtained for the first time.
MI2: MI value of pellets obtained for the second time.
MI3: MI value of pellets obtained for the third time.
X: means that the resin was degraded and pellets could not be obtained after extrusion of strands.

From Table 6, the compositions (Mixtures 1 - 3) of the present invention containing 6-hydroxychroman compound were extremely superior in stability during processing of repeat extrusion in the following comparisons, as compared to the compositions (Comparative Example Mixtures 4 - 6) without 6-hydroxychroman compound.
Comparison (A): the present invention composition Mixture 1 and Comparative Example composition Mixture 4
Comparison (B): the present invention composition Mixture 2 and Comparative Example composition Mixture 5
Comparison (C): the present invention composition Mixture 3 and Comparative Example composition Mixture 6

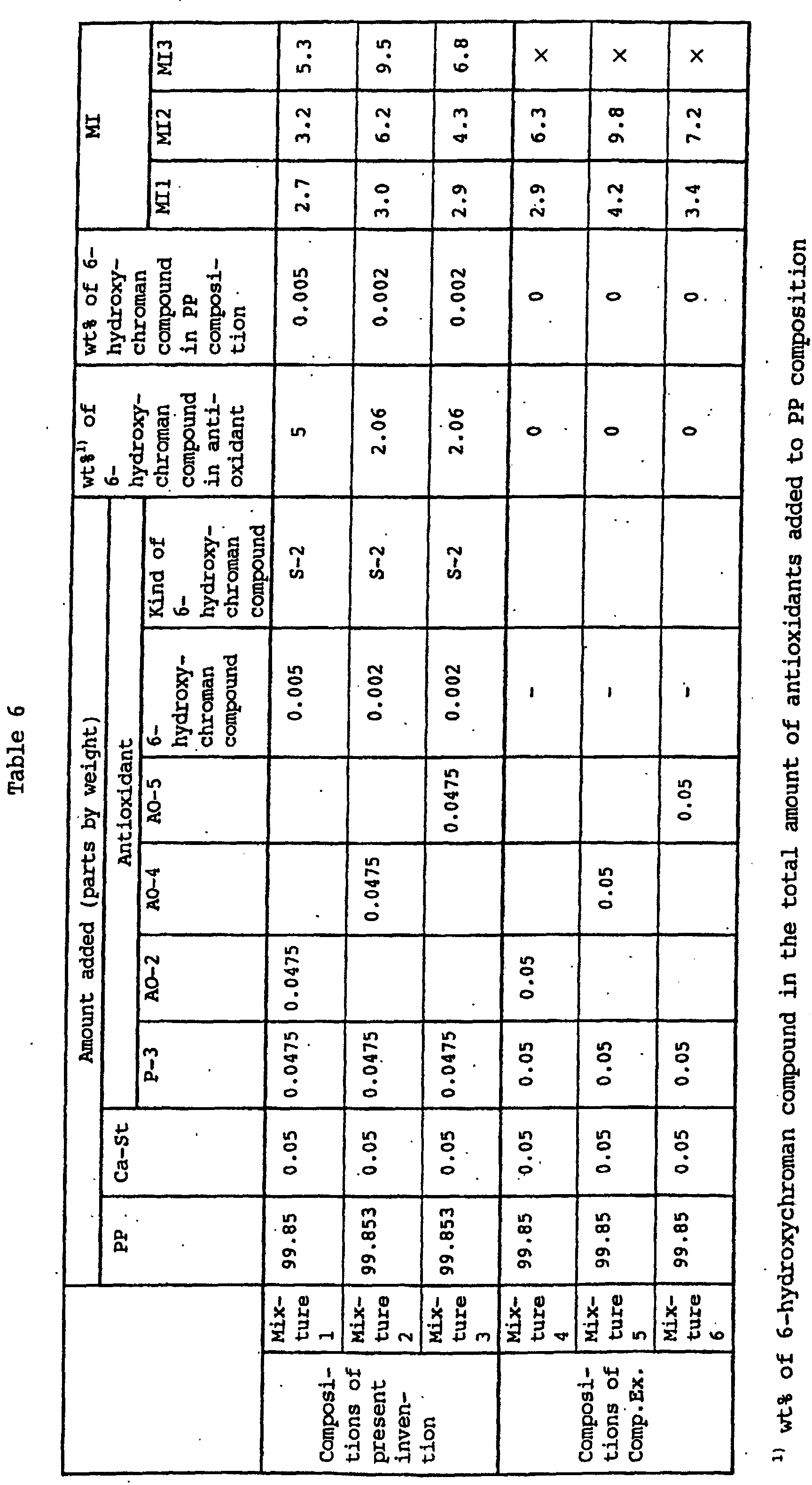

### Example 7

The Mixtures shown in Table 7 were dry-mixed for 5 min in a tumbler mixer and extruded from a 20 mm diameter extruder (die temperature set to 260°C) to give strands, which were cooled with water and cut into pellets. This step was repeated 4 times. The stability during processing was evaluated by measuring, according to JIS K-7210, MI of the pellets extruded each time. The temperature for measurement was 230°C and measurement load was 2.16 kgf. In Comparative Examples, the following 6-acetoxychroman compound (S-4) and benzofuranone compound (S-10) were used instead of 6-hydroxychroman compound.

The symbols used in Tables 7-1 to 7-3 mean the following:
PP:polypropylene (homopolymer)
Ca-St:calcium stearate
P-1:tris(2,4-di-tert-butylphenyl) phosphite (manufactured by Yoshitomi Fine Chemicals Ltd., trademark: Tomiphos 202)
AO-2:tetrakis[3-(3,5-di-tert-butyl-4-hydroxyphenyl)-propionyloxymethyl]methane (manufactured by Yoshitomi Fine Chemicals Ltd., trademark:Tominox TT)
S-1:2,2-dimethyl-6-hydroxychroman
S-2:2,2,5-trimethyl-7-tert-butyl-6-hydroxychroman
S-3:2,2,5-trimethyl-8-tert-butyl-6-hydroxychroman
S-5:2,2,7,8-tetramethyl-6-hydroxychroman
S-6:2,2,5,7-tetramethyl-6-hydroxychroman
S-7:2,2,5,8-tetramethyl-6-hydroxychroman
S-8:2,2-dimethyl-7-tert-butyl-6-hydroxychroman
S-9:4-isopropyl-2,2,5-trimethyl-7-tert-butyl-6-hydroxychroman
S-12:2,2,5,7,8-pentamethyl-6-hydroxychroman
S-4:2,2,5,7,8-pentamethyl-6-acetoxychroman
S-10:3-(3,4-dimethylphenyl)-5,7-di-tert-butyl-3H-benzofuran-2-one (synthesized according to the method described in JP-A-7-233160)
MI1: MI value of pellets obtained for the first time.
MI2: MI value of pellets obtained for the second time.
MI3: MI value of pellets obtained for the second time.
MI4: MI value of pellets obtained for the fourth time.

From Tables 7-1 - 7-3, it is evident that the compositions (Mixtures 1 - 27) of the present invention were fine in the stability during processing, as compared to the Comparative Example compositions (Mixtures 28 - 34). It is also evident that Mixtures 28 - 30 of Comparative Examples containing 2,2,5,7,8-pentamethyl-6-acetoxychroman (S-4) showed the same level of stability during processing as the blank.

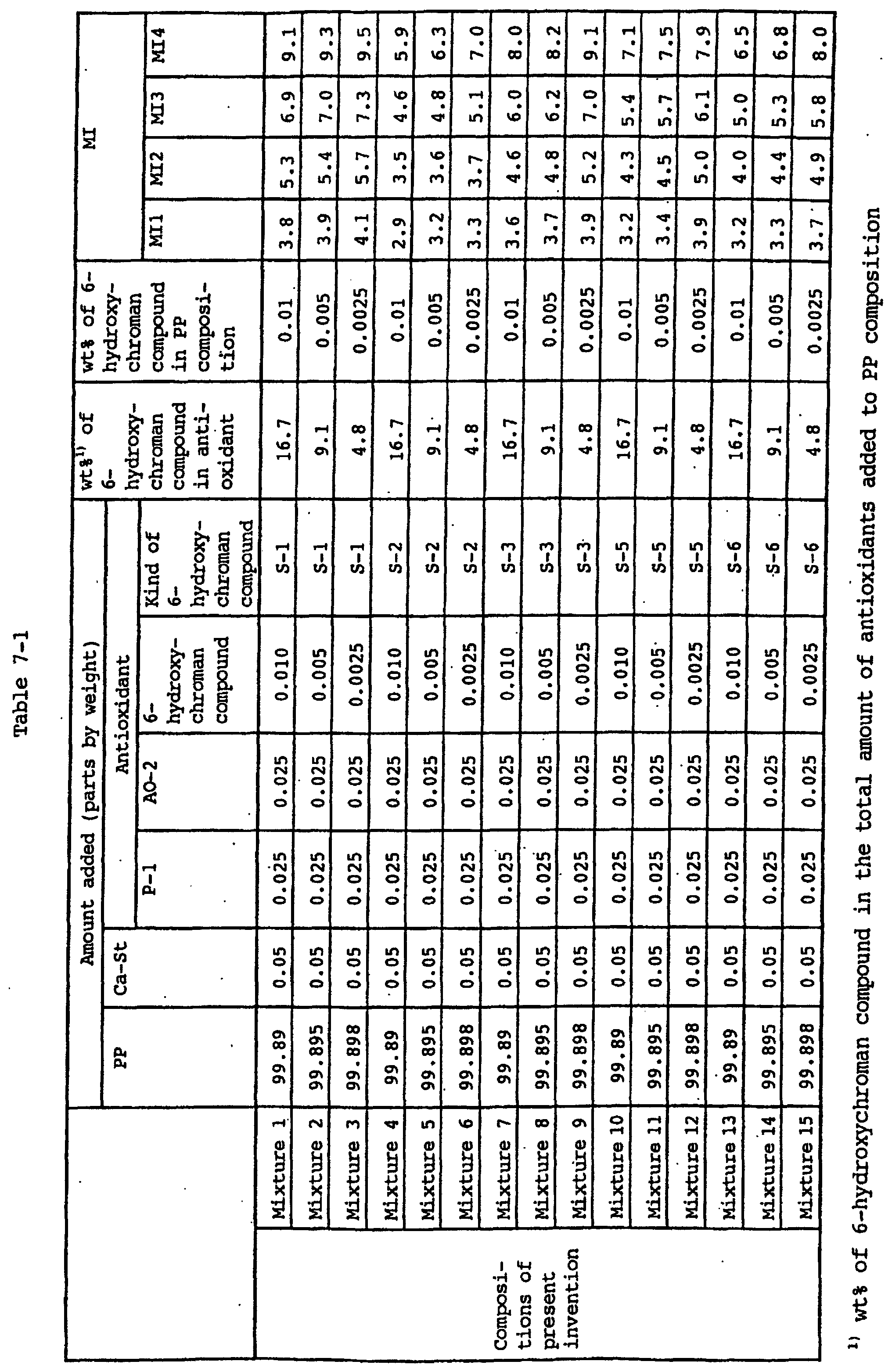

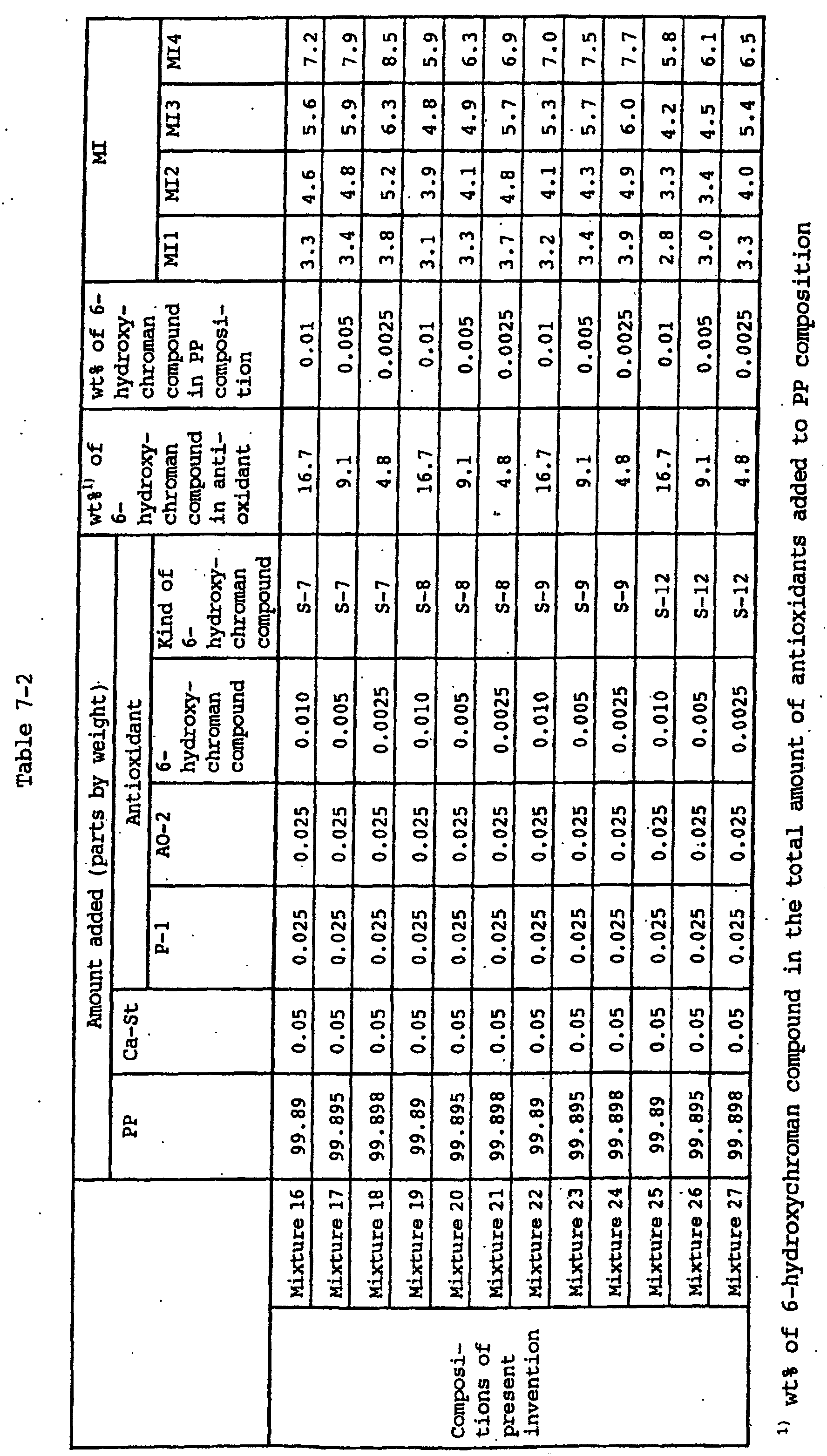

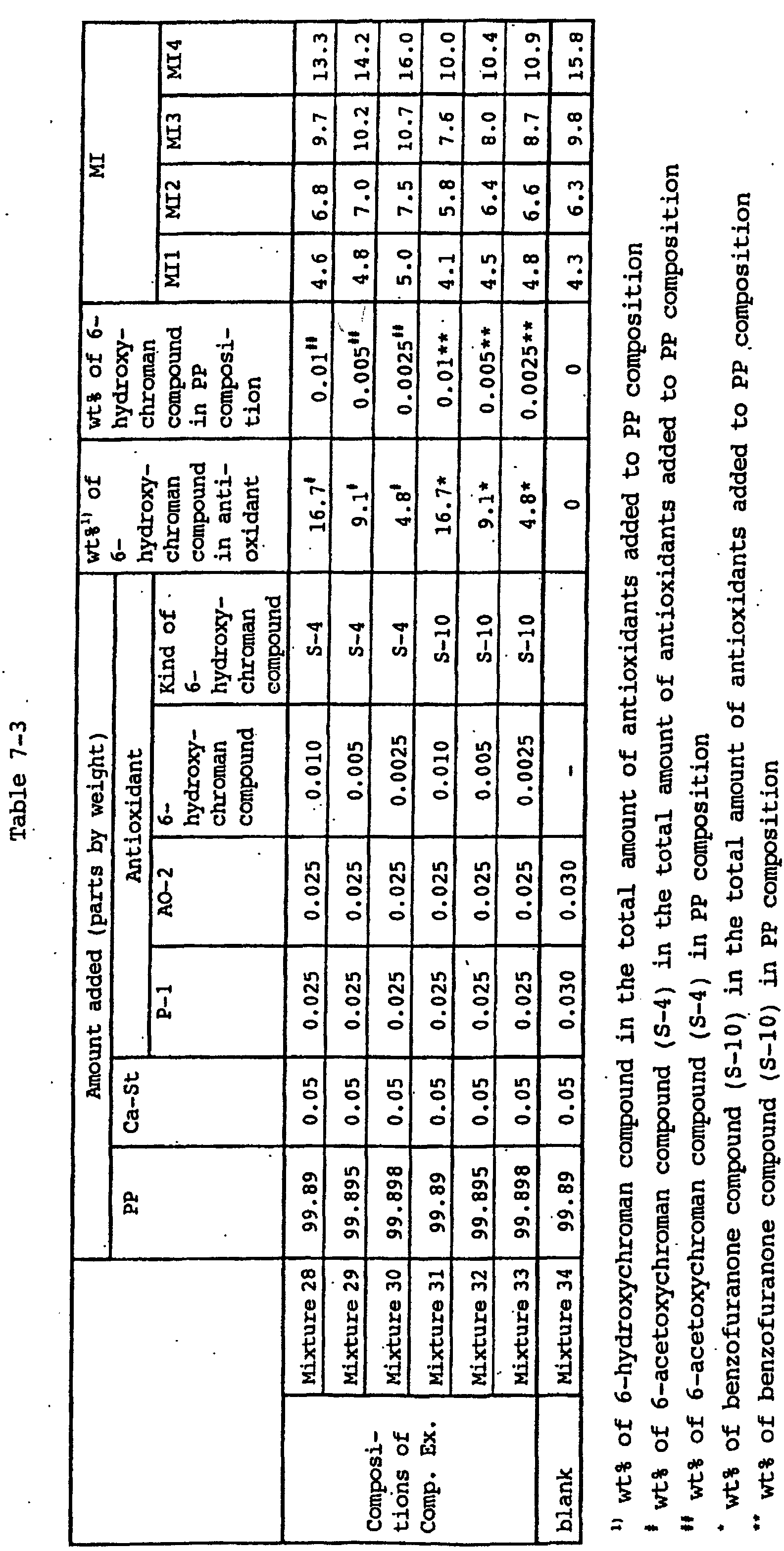

### Example 8

The Mixtures shown in Table 8 were dry-mixed for 5 min in a tumbler mixer and extruded from a 20 mm diameter extruder (die temperature set to 280°C) to give strands, which were cooled with water and cut into pellets. This step was repeated 3 times. The stability during processing was evaluated by measuring, according to JIS K-7210, MI of the pellets extruded each time. The temperature for measurement was 230°C and measurement load was 2.16 kgf. In Comparative Examples, the following benzofuranone compound (S-10) was used instead of 6-hydroxychroman compound.

The symbols used in Table 8 mean the following:
PP:polypropylene (homopolymer)
Ca-St:calcium stearate
P-1:tris(2,4-di-tert-butylphenyl) phosphite (manufactured by Yoshitomi Fine Chemicals Ltd., trademark: Tomiphos 202)
AO-2:tetrakis[3-(3,5-di-tert-butyl-4-hydroxyphenyl)-propionyloxymethyl]methane (manufactured by Yoshitomi Fine Chemicals Ltd., trademark:Tominox TT)
AO-3:2,6-di-tert-butyl-4-methylphenol (manufactured by Yoshitomi Fine Chemicals Ltd., trademark:Yoshinox BHT)
S-2:2,2,5-trimethyl-7-tert-butyl-6-hydroxychroman
S-6:2,2,5,7-tetramethyl-6-hydroxychroman
S-8:2,2-dimethyl-7-tert-butyl-6-hydroxychroman
S-10:3-(3,4-dimethylphenyl)-5,7-di-tert-butyl-3H-benzofuran-2-one (synthesized according to the method described in JP-A-7-233160)
MI1: MI value of pellets obtained for the first time.
MI2: MI value of pellets obtained for the second time.
MI3: MI value of pellets obtained for the third time.
X: means that the resin was degraded and pellets could not be obtained after extrusion of strands.

From Table 8, it is evident that the compositions (Mixtures 1 - 9) of the present invention showed markedly smaller MI values than Comparative Example Mixture 16 without 6-hydroxychroman compound and superior stability during processing as compared to Comparative Examples. The compositions of the present invention containing 6-hydroxychroman compounds (S-2, S-6, S-8) as synergists showed a fine improving effect on the stability during processing as compared to the compositions containing the same amounts of 2,6-di-tert-butyl-4-methylphenol (AO-3) and 3-(3,4-dimethylphenyl)-5,7-di-tert-butyl-3H-benzofuran-2-one (S-10) as synergists.
Comparison (A): the present invention composition Mixtures 1 - 9 and Comparative Example composition Mixture 16
Comparison (B1): the present invention composition Mixtures 1 - 3 and Comparative Example composition Mixtures 10 - 12
Comparison (B2): the present invention composition Mixtures 4 - 6 and Comparative Example composition Mixtures 10 - 12
Comparison (B3): the present invention composition Mixtures 7 - 9 and Comparative Example composition Mixtures 10 - 12
Comparison (C1): the present invention composition Mixtures 1 - 3 and Comparative Example composition Mixtures 13 - 15
Comparison (C2): the present invention composition Mixtures 4 - 6 and Comparative Example composition Mixtures 13 - 15
Comparison (C3): the present invention composition Mixtures 7 - 9 and Comparative Example composition Mixtures 13 - 15

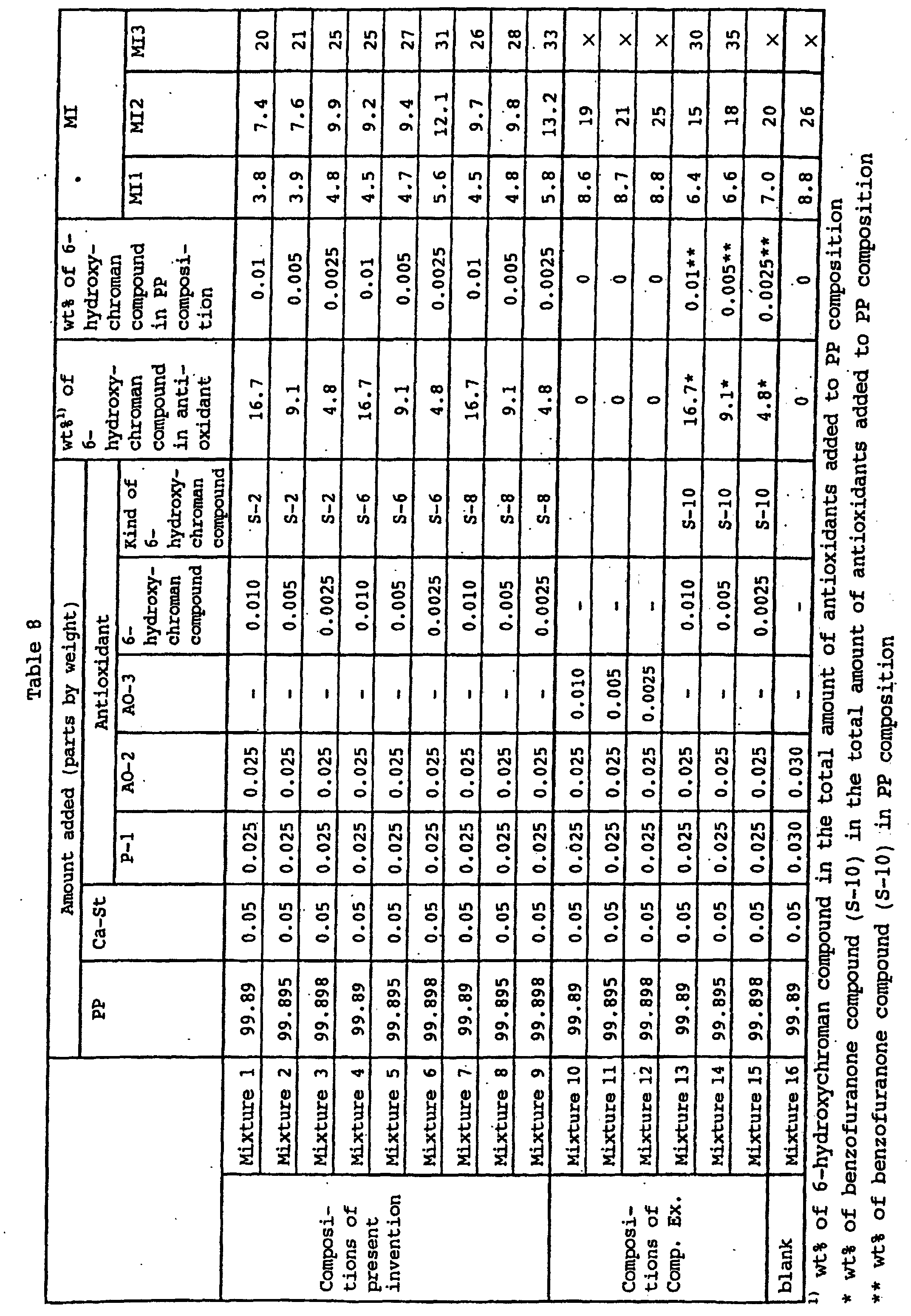

### Example 9

Polyethylene (linear polyethylene) was mixed in a beaker according to the compositions shown in Table 9. Using Labo Plastomill, the torque increase start time was measured by mixing at 210°C, 60 rpm and resin amount of 40 g. In Comparative Examples, the following benzofuranone compound (S-10) was used instead of 6-hydroxychroman compound.

The symbols used in Table 9 mean the following:
PE: polyethylene (linear polyethylene)
P-2: tetrakis(2,4-di-tert-butyl-5-methylphenyl)-4,4'-biphenylenediphosphonite (manufactured by Yoshitomi Fine Chemicals Ltd., trademark:GSY-P101)
AO-1:n-octadecyl 3-(3,5-di-tert-butyl-4-hydroxyphenyl)propionate (manufactured by Yoshitomi Fine Chemicals Ltd., trademark:Tominox SS)
S-2:2,2,5-trimethyl-7-tert-butyl-6-hydroxychroman
S-10:3-(3,4-dimethylphenyl)-5,7-di-tert-butyl-3H-benzofuran-2-one (synthesized according to the method described in JP-A-7-233160)

From Table 9, it is evident that the composition (Mixture 1) of the present invention containing 6-hydroxychroman compound (s-2) showed longer torque increase start time than Comparative Example Mixture 2 containing the same amount of benzofuranone compound (S-10) or Comparative Example Mixture 3 without 6-hydroxychroman compound, and therefore, fine thermal stability during processing.

## Claims

1. A stabilizer composition for an organic polymer material, which comprises (a) a compound of the formula (1) 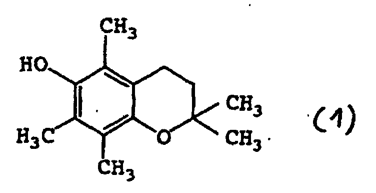 and (b) a phenolic antioxidant and a phosphorus antioxidant, wherein the component (a) is contained in a proportion of 1 wt% - 20 wt% and the component (b) is contained in a proportion of 99 wt% - 80 wt%, of the total amount of the component (a) and the component (b).

2. The stabilizer composition of claim 1, wherein the weight ratio of the amount of the phenolic antioxidant and the amount of the phosphorus antioxidant is 1:0.25 - 1:4.

3. The stabilizer composition of claim 1, wherein the component (a) is contained in a proportion of 1 wt% - 6.5 wt% and the component (b) is contained in a proportion of 99 wt% - 93.5 wt%, of the total amount of the component (a) and the component (b).

4. The stabilizer composition of claim 1, wherein the component (a) is contained in a proportion of 1 wt% - 4.5 wt% and the component (b) is contained in a proportion of 99 wt% - 95.5 wt%, of the total amount of the component (a) and the component (b).

5. The stabilizer composition of any of claim 1 to claim 4, wherein the phenolic antioxidant is at least one member selected from:
n-octadecyl 3-(3,5-di-tert-butyl-4-hydroxyphenyl)propionate,
tetrakis[3-(3,5-di-tert-butyl-4-hydroxyphenyl)-propionyloxymethyl]methane,
1,3,5-tris(3,5-di-tert-butyl-4-hydroxybenzyl) isocyanurate, and
1,3,5-trimethyl-2,4,6-tris(3,5-di-tert-butyl-4-hydroxybenzyl)benzene.

6. The stabilizer composition of claim 5, wherein the phenolic antioxidant is at least one member selected from n-octadecyl 3-(3,5-di-tert-butyl-4-hydroxyphenyl)propionate and tetrakis[3-(3,5-di-tert-butyl-4-hydroxyphenyl)propionyloxymethyl]methane.

7. The stabilizer composition of any of claim 1 to claim 6, wherein the phosphorus antioxidant is at least one member selected from:
tris(2,4-di-tert-butylphenyl) phosphite,
tetrakis(2,4-di-tert-butylphenyl)-4,4'-biphenylenediphosphonite,
tetrakis(2,4-di-tert-butyl-5-methylphenyl)-4,4'-biphenylenediphosphonite,
bis(2,4-di-tert-butylphenyl) pentaerythritol diphosphite,
bis(2,6-di-tert-butyl-4-methylphenyl) pentaerythritol diphosphite,
2,2'-methylenebis(4,6-di-tert-butylphenyl)-2-ethylhexyl phosphite,
bis[2-methyl-4,6-bis(1,1-dimethylethyl)phenyl] ethyl phosphite, and
2,2',2"-nitrilo[triethyltris(3,3',5,5'-tetra-tert-butyl-1,1'-biphenyl-2,2'-diyl)phosphite].

8. An organic polymer material composition comprising an organic polymer and a stabilizer composition of any of claim 1 to claim 7.

9. An organic polymer material composition comprising an organic polymer and a stabilizer composition of any of claim 1 to claim 7, wherein the content of the component (a) in 100 parts by weight of the organic polymer material composition is 0.0005 part by weight -0.025 part by weight.

10. The organic polymer material composition of claim 9, wherein the content of the component (a) in 100 parts by weight of the organic polymer material composition is 0.0005 part by weight - 0.005 part by weight.

11. An organic polymer material composition, which comprises (a) a compound of the formula (1) 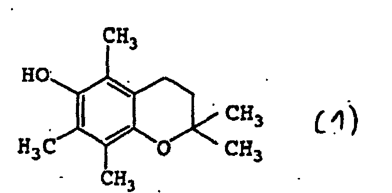 (b) a phenolic antioxidant and a phosphorus antioxidant; and (c) an organic polymer, wherein the component (a) is contained in the range of 0.0005 part by weight - 0.025 part by weight per 100 parts by weight of the total amount of the component (a), the component (b) and the component (c).

12. The organic polymer material composition of claim 11, wherein the component (a) is contained in the range of 0.001 part by weight - 0.02 part by weight per 100 parts by weight of the total amount of the component (a), the component (b) and the component (c).

13. The organic polymer material composition of claim 12, wherein the component (a) is contained in the range of 0.001 part by weight - 0.005 part by weight per 100 parts by weight of the total amount of the component (a), the component (b) and the component (c).

14. The organic polymer material composition of any of claim 11 to claim 13, wherein the total amount of the component (a) and the component (b) is 0.01 part by weight - 1 part by weight per 100 parts by weight of the total amount of the component (a), the component (b) and the component (c).

15. The organic polymer material composition of any of claim 11 to claim 13, wherein the component (a) is contained in a proportion of 1 wt% - 20 wt% and the component (b) is contained in a proportion of 99 wt% - 80 wt% of the total amount of the component (a) and the component (b).

16. The organic polymer material composition of claim 15, wherein the component (a) is contained in a proportion of 1 wt% - 4.5 wt% and the component (b) is contained in a proportion of 99 wt% - 95.5 wt% of the total amount of the component (a) and the component (b).

17. The organic polymer material composition of claim 11, wherein the component (a) is contained in a proportion of 1 wt% - 20 wt% and the component (b) is contained in a proportion of 99 wt% - 80 wt% of the total amount of the component (a) and the component (b), and the component (a) is contained in the range of 0.0005 part by weight - 0.005 part by weight per 100 parts by weight of the total amount of the component (a), the component (b) and the component (c).

18. The organic polymer material composition of claim 17, wherein the component (a) is contained in a proportion of 1 wt% - 4.5 wt% and the component (b) is contained in a proportion of 99 wt% - 95.5 wt% of the total amount of the component (a) and the component (b).

19. The organic polymer material composition of any of claim 11 to claim 18, wherein the phenolic antioxidant is at least onemember selected from:
n-octadecyl 3-(3,5-di-tert-butyl-4-hydroxyphenyl)propionate, tetrakis[3-(3,5-di-tert-butyl-4-hydroxyphenyl)-propionyloxymethyl]methane,
1,3,5-tris(3,5-di-tert-butyl-4-hydroxybenzyl) isocyanurate, and
1,3,5-trimethyl-2,4,6-tris(3,5-di-tert-butyl-4-hydroxybenzyl)benzene.

20. The organic polymer material composition of any of claim 11 to claim 19, wherein the phosphorus antioxidant is at least one member selected from:
tris(2,4-di-tert-butylphenyl)phosphite,
tetrakis(2,4-di-tert-butylphenyl)-4,4'-biphenylenediphosphonite,
tetrakis(2,4-di-tert-butyl-5-methylphenyl)-4,4'-biphenylenediphosphonite, bis(2,4-di-tert-butylphenyl) pentaerythritol diphosphite,
bis(2,6-di-tert-butyl-4-methylphenyl) pentaerythritol diphosphite,
2,2'-methylenebis(4,6-di-tert-butylphenyl)-2-ethylhexyl phosphite,
bis[2-methyl-4,6-bis(1,1-dimethylethyl)phenyl]ethylphosphite, and
2,2',2"-nitrilo[triethyltris(3,3',5,5'-tetra-tert-butyl-1,1'-biphenyl-2,2'-diyl)phosphite].

21. The organic polymer material composition of any of claim 11 to claim 20, wherein the weight ratio of the amount of the phenolic antioxidant and the amount of the phosphorus antioxidant is 1:0.25 - 1:4.

22. The organic polymer material composition of any of claim 11 to claim 21, wherein the organic polymer is a synthetic resin.

23. The organic polymer material composition of any of claim 11 to claim 21, wherein the organic polymer is a polyolefin resin.

24. The organic polymer material composition of any of claim 11 to claim 21, wherein the organic polymer is a polyethylene resin, a polypropylene resin, a mixture or a compatible polymer of a polyethylene resin and a polypropylene resin, a compatible polymer containing a polyethylene resin and/or a polypropylene resin, an ethylene-vinyl acetate copolymer or an ethylene-propylene copolymer.

## Patentansprüche

1. Stabilisator-Zusammensetzung für ein organisches Polymermaterial, die (a) eine Verbindung der Formel (1) 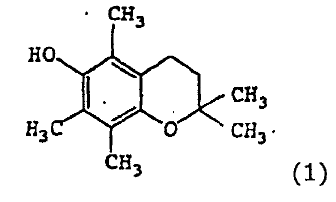 und (b) ein Phenol-Antioxidationsmittel und ein Phosphor-Antioxidationsmittel umfasst, wobei die Komponente (a) in einem Anteil von 1 Gew.-% bis 20 Gew.-% enthalten ist, und die Komponente (b) in einem Anteil von 99 Gew.-% bis 80 Gew.-% enthalten ist, bezogen auf die Gesamtmenge der Komponente (a) und der Komponente (b).

2. Stabilisator-Zusammensetzung gemäß Anspruch 1, wobei das Gewichtsverhältnis der Menge des Phenol-Antioxidationsmittels und der Menge des Phosphor-Antioxidationsmittels 1:0,25 bis 1:4 ist.

3. Stabilisator-Zusammensetzung gemäß Anspruch 1, wobei die Komponente (a) in einem Anteil von 1 Gew.-% bis 6,5 Gew.-% enthalten ist, und die Komponente (b) in einem Anteil von 99 Gew.-% bis 93,5 Gew.-% enthalten ist, bezogen auf die Gesamtmenge der Komponente (a) und der Komponente (b).

4. Stabilisator-Zusammensetzung gemäß Anspruch 1, wobei die Komponente (a) in einem Anteil von 1 Gew.-% bis 4,5 Gew.-% enthalten ist, und die Komponente (b) in einem Anteil von 99 Gew.-% bis 95,5 Gew.-% enthalten ist, bezogen auf die Gesamtmenge der Komponente (a) und der Komponente (b).

5. Stabilisator-Zusammensetzung gemäß irgendeinem der Ansprüche 1 bis 4, wobei das Phenol-Antioxidationsmittel wenigstens eine Verbindung ist, die aus n-Octadecyl-3-(3,5-di-tert-butyl-4-hydroxyphenyl)propionat, Tetrakis[3-(3,5-di-tert-butyl-4-hydroxyphenyl)-propionyloxymethyl]methan, 1,3,5-Tris(3,5-di-tert-butyl-4-hydroxybenzyl)isocyanurat und 1,3,5-Trimethyl-2,4,6-tris(3,5-ditert-butyl-4-hydroxybenzyl)benzol ausgewählt ist.

6. Stabilisator-Zusammensetzung gemäß Anspruch 5, wobei das Phenol-Antioxidationsmittel wenigstens eine Verbindung ist, die aus n-Octadecyl-3(3,5-di-tert-butyl-4-hydroxyphenyl)propionat und Tetrakis[3(3,5-di-tert-butyl-4-hydroxyphenyl)propionyloxymethyl]methan ausgewählt ist.

7. Stabilisator-Zusammensetzung gemäß irgendeinem der Ansprüche 1 bis 6, wobei das Phosphor-Antioxidationsmittel wenigstens eine Verbindung ist, die aus Tris(2,4-di-tert-butylphenyl)phosphit, Tetrakis(2,4-di-tert-butylphenyl)-4,4'-biphenylendiphosphonit, Tetrakis(2,4-di-tert-butyl-5-methylphenyl)-4,4' biphenylendiphosphonit, Bis(2,4-di-tert-butylphenyl)pentaerythritdiphosphit, Bis(2,6-di-tertbutyl-4-methylphenyl)pentaerythritdiphosphit, 2,2'-Methylenbis(4,6-di-tert-butylphenyl)-2-ethylhexylphosphit, Bis[2-methyl-4,6-bis(1,1-dimethylethyl)phenyl]ethylphosphit und 2,2',2"-Nitrilo[triethyltris(3,3',5,5'-tetra-tert-butyl-1,1'-biphenyl-2,2'-diyl)phosphit] ausgewählt ist.

8. Organische Polymermaterial-Zusammensetzung, die ein organisches Polymer und eine Stabilisator-Zusammensetzung gemäß irgendeinem der Ansprüche 1 bis 7 umfasst.

9. Organische Polymermaterial-Zusammensetzung, die ein organisches Polymer und eine Stabilisator-Zusammensetzung gemäß irgendeinem der Ansprüche 1 bis 7 umfasst, wobei der Gehalt der Komponente (a) in 100 Gewichtsteilen der organischen Polymermaterial-Zusammensetzung 0,0005 Gewichtsteile bis 0,025 Gewichtsteile beträgt.

10. Organische Polymermaterial-Zusammensetzung gemäß Anspruch 9, wobei der Gehalt der Komponente (a) in 100 Gewichtsteilen der organischen Polymermaterial-Zusammensetzung 0,0005 Gewichtsteile bis 0,005 Gewichtsteile beträgt.

11. Organische Polymermaterial-Zusammensetzung, umfassend (a) eine Verbindung der Formel (1) 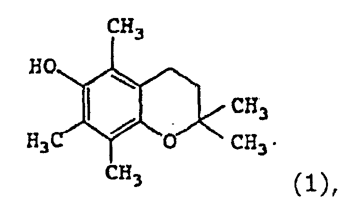 (b) ein Phenol-Antioxidationsmittel und ein Phosphor-Antioxidationsmittel und (c) ein organisches Polymer, wobei die Komponente (a) im Bereich von 0,0005 Gewichtsteilen bis 0,025 Gewichtsteilen pro 100 Gewichtsteile der Gesamtmenge von Komponente (a), Komponente (b) und Komponente (c) enthalten ist.

12. Organische Polymermaterial-Zusammensetzung gemäß Anspruch 11, wobei die Komponente (a) im Bereich von 0,001 Gewichtsteilen bis 0,02 Gewichtsteilen pro 100 Gewichtsteile der Gesamtmenge von Komponente (a), Komponente (b) und Komponente (c) enthalten ist.

13. Organische Polymermaterial-Zusammensetzung gemäß Anspruch 12, wobei die Komponente (a) im Bereich von 0,001 Gewichtsteilen bis 0,005 Gewichtsteilen pro 100 Gewichtsteile der Gesamtmenge von Komponente (a), Komponente (b) und Komponente (c) enthalten ist.

14. Organische Polymermaterial-Zusammensetzung gemäß irgendeinem der Ansprüche 11 bis 13, wobei die Gesamtmenge der Komponente (a) und der Komponente (b) 0,01 Gewichtsteile bis 1 Gewichtsteil pro 100 Gewichtsteile der Gesamtmenge von Komponente (a), Komponente (b) und Komponente (c) ist.

15. Organische Polymermaterial-Zusammensetzung gemäß irgendeinem der Ansprüche 11 bis 13, wobei die Komponente (a) in einem Anteil von 1 Gew.-% bis 20 Gew.-% enthalten ist, und die Komponente (b) in einem Anteil von 99 Gew.-% bis 80 Gew.-% enthalten ist, bezogen auf die Gesamtmenge der Komponente (a) und der Komponente (b).

16. Organische Polymermaterial-Zusammensetzung gemäß Anspruch 15, wobei die Komponente (a) in einem Anteil von 1 Gew.-% bis 4,5 Gew.-% enthalten ist, und die Komponente (b) in einem Anteil von 99 Gew.-% bis 95,5 Gew.-% enthalten ist, bezogen auf die Gesamtmenge der Komponente (a) und der Komponente (b).

17. Organische Polymermaterial-Zusammensetzung gemäß Anspruch 11, wobei die Komponente (a) in einem Anteil von 1 Gew.-% bis 20 Gew.-% enthalten ist, und die Komponente (b) in einem Anteil von 99 Gew.-% bis 80 Gew.-% enthalten ist, bezogen auf die Gesamtmenge der Komponente (a) und der Komponente (b), und die Komponente (a) im Bereich von 0,0005 Gewichtsteilen bis 0,005 Gewichtsteilen pro 100 Gewichtsteile der Gesamtmenge der Komponente (a), der Komponente (b) und der Komponente (c) enthalten ist.

18. Organische Polymermaterial-Zusammensetzung gemäß Anspruch 17, wobei die Komponente (a) in einem Anteil von 1 Gew.-% bis 4,5 Gew.-% enthalten ist, und die Komponente (b) in einem Anteil von 99 Gew.-% bis 95,5 Gew.-% enthalten ist, bezogen auf die Gesamtmenge der Komponente (a) und der Komponente (b).

19. Organische Polymermaterial-Zusammensetzung gemäß irgendeinem der Ansprüche 11 bis 18, wobei das Phenol-Antioxidationsmittel wenigstens eine Verbindung ist, die aus n-Octadecyl-3-(3,5-di-tertbutyl-4-hydroxyphenyl)propionat, Tetrakis[3-(3,5-di-tert-butyl-4-hydroxyphenyl)propionyloxymethyl]methan, 1,3,5-Tris(3,5-di-tert-butyl-4-hydroxybenzyl)isocyanurat und 1,3,5-Trimethyl-2,4,6-tris(3,5-ditert-butyl-4-hydroxybenzyl)benzol ausgewählt ist.

20. Organische Polymermaterial-Zusammensetzung gemäß irgendeinem der Ansprüche 11 bis 19, wobei das Phosphor-Antioxidationsmittel wenigstens eine Verbindung ist, die aus Tris(2,4-di-tert-butylphenyl)-phosphit, Tetrakis(2,4-di-tert-butylphenyl)-4,4'-biphenylendiphosphonit, Tetrakis(2,4-di-tert-butyl-5-methylphenyl)-4,4' biphenylendiphosphonit, Bis(2,4-di-tert-butylphenyl)pentaerythritdiphosphit, Bis(2,6-di-tertbutyl-4-methylphenyl)pentaerythritdiphosphit, 2,2'-Methylenbis(4,6-di-tert-butylphenyl)-2-ethylhexylphosphit, Bis[2-methyl-4,6bis(1,1-dimethylethyl)phenyl]ethylphosphit und 2,2',2"-Nitrilo[triethyltris(3,3',5,5'-tetra-tert-butyl-1,1'-biphenyl-2,2'-diyl)phosphit] ausgewählt ist.

21. Organische Polymermaterial-Zusammensetzung gemäß irgendeinem der Ansprüche 11 bis 20, wobei das Gewichtsverhältnis der Menge des Phenol-Antioxidationsmittels und der Menge des Phosphor-Antioxidationsmittels 1:0,25 bis 1:4 ist.

22. Organische Polymermaterial-Zusammensetzung gemäß irgendeinem der Ansprüche 11 bis 21, wobei das organische Polymer ein synthetisches Harz ist.

23. Organische Polymermaterial-Zusammensetzung gemäß irgendeinem der Ansprüche 11 bis 21, wobei das organische Polymer ein Polyolefinharz ist.

24. Organische Polymermaterial-Zusammensetzung gemäß irgendeinem der Ansprüche 11 bis 21, wobei das organische Polymer folgendes ist: ein Polyethylenharz, ein Polypropylenharz, eine Mischung oder ein kompatibles Polymer eines Polyethylenharzes und eines Polypropylenharzes, ein kompatibles Polymer, das ein Polyethylenharz und/oder ein Polypropylenharz enthält, ein Ethylen-Vinylacetat-Copolymer oder ein Ethylen-Propylen-Copolymer.

## Revendications

1. Composition de stabilisateur pour un matériau polymère organique, qui comprend (a) un composé de la formule (1) 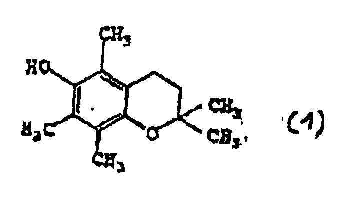 et (b) un anti-oxydant phénolique et un anti-oxydant au phosphore, dans laquelle le composant (a) est contenu dans une proportion de 1% en poids - 20% en poids et le composant (b) est contenu dans une proportion de 99% en poids - 80% en poids, de la quantité totale du composant (a) et du composant (b).

2. Composition de stabilisateur selon la revendication 1, dans laquelle le rapport en poids de la quantité d'anti-oxydant phénolique et de la quantité d'anti-oxydant au phosphore est de 1 :0,25 - 1 :4.

3. Composition de stabilisateur selon la revendication 1, dans laquelle le composant (a) est contenu dans une proportion de 1% en poids - 6,5% en poids, et le composant (b) est contenu dans une proportion de 99% en poids - 93,5% en poids de la quantité totale du composant (a) et du composant (b).

4. Composition de stabilisateur selon la revendication 1, dans laquelle le composant (a) est contenu dans une proportion de 1% en poids - 4,5% en poids, et le composant (b) est contenu dans une proportion de 99% en poids - 95,5% en poids de la quantité totale du composant (a) et du composant (b).

5. Composition de stabilisateur selon l'une quelconque des revendications 1 à 4, dans laquelle l'anti-oxydant phénolique est au moins un élément choisi parmi le n-octadécyl 3-(3,5-di-tert-butyl-4-hydroxyphényl)propionate, le tétrakis[3-(3,5-di-tert-butyl-4-hydroxyphényl)-propionyloxyméthyl]méthane, le 1,3,5-tris(3,5-di-tert-butyl-4-hydroxybenzyl) isocyanurate, et le 1,3,5-triméthyl-2,4,6-tris-3,5-di-tert-butyl-4-hydroxybenzyl)benzène.

6. Composition de stabilisateur selon la revendication 5, dans laquelle l'anti-oxydant phénolique est au moins un élément choisi à partir de n-octadécyl 3-(3,5-di-tert-butyl-4-hydroxyphényl)-propionate et du tétrakis[3-(3,5-di-tert-butyl-4-hydroxyphényl)propionyloxyméthyl]méthane.

7. Composition de stabilisateur de l'une quelconque des revendications 1 à 6, dans laquelle l'anti-oxydant au phosphore est au moins un élément choisi parmi le tris(2,4-di-tert-butylphényl) phosphite, le tétrakis(2,4-di-tert-butylphényl)-4,4'-biphénylènediphosphonite, le tétrakis(2,4-di-tert-butyl-5-méthylphényl)-4,4'-biphénylènedisphosphonite, le bis(2,4-di-tert-butylphényl) pentaérythritol diphosphite, le bis(2,6-di-tert-butyl-4-méthylphényl) pentaérythritol diphosphite, le 2,2'-méthylènebis(4,6-di-tert-butylphényl)-2-éthylhexyl phosphite, le bis(2-méthyl-4,6-bis(1,1-diméthyléthyl)phényl]éthyl phosphite, et le 2,2',2''-nitrilo[triéthyltris(3,3',5,5'-tétra-tert-butyl-1,1'-biphényl-2,2'-diyl)phosphite].

8. Composition de matériau polymère organique comprenant un polymère organique et une composition de stabilisateur selon l'une quelconque des revendications 1 à 7.

9. Composition de matériau polymère organique comprenant un polymère organique et une composition de stabilisateur selon l'une quelconque des revendications 1 à 7, dans laquelle la teneur en composant (a) dans 100 parties en poids de la composition de matériau polymère organique est de 0,0005 partie en poids -0,025 partie en poids.

10. Composition de matériau polymère organique selon la revendication 9, dans laquelle la teneur en composant (a) dans 100 parties en poids de la composition de matériau polymère organique est de 0,0005 partie en poids - 0,005 partie en poids.

11. Composition de matériau polymère organique, qui comprend (a) un composé de la formule (1) 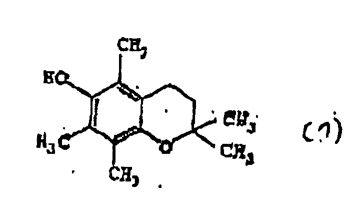 (b) un anti-oxydant phénolique et un anti-oxydant au phosphore et (c) un polymère organique, dans laquelle le composant (a) est contenu dans une gamme de 0,0005 partie en poids - 0,025 partie en poids pour 100 parties en poids de la quantité totale du composant (a), du composant (b) et du composant (c).

12. Composition de matériau polymère organique selon la revendication 11, dans laquelle le composant (a) est contenu dans la gamme de 0,001 partie en poids - 0,02 partie en poids pour 100 parties en poids de la quantité totale du composant (a), du composant (b) et du composant (c).

13. Composition de matériau polymère organique selon la revendication 12, dans laquelle le composant (a) est contenu dans la gamme de 0, 001 partie en poids - 0,005 partie en poids pour 100 parties en poids de la quantité totale du composant (a), du composant (b) et du composant (c).

14. Composition de matériau polymère organique selon l'une quelconque des revendications 11 à 13, dans laquelle la quantité totale du composant (a) et du composant (b) est de 0,01 partie en poids - 1 partie en poids pour 100 parties en poids de la quantité totale du composant (a), du composant (b) et du composant (c).

15. Composition de matériau polymère organique selon l'une quelconque des revendications 11 à 13, dans laquelle le composant (a) est contenu dans une proportion de 1% en poids à 20% en poids et le composant (b) est contenu dans une proportion de 99% en poids-80% en poids de la quantité totale du composant (a) et du composant (b).

16. Composition de matériau polymère organique selon la revendication 15, dans laquelle le composant (a) est contenu dans une proportion de 1% en poids-4,5% en poids, et le composant (b) est contenu dans une proportion de 99% en poids-95,5% en poids de la quantité totale du composant (a) et du composant (b).

17. Composition de matériau polymère organique selon la revendication 11, dans laquelle le composant (a) est contenu dans une proportion de 1% en poids -20% en poids et le composant (b) est contenu dans une proportion de 99% en poids - 80% en poids de la quantité totale du composant (a) et du composant (b), et le composant (a) est contenu dans une gamme de 0,0005 partie en poids - 0,005 partie en poids pour 100 parties en poids de la quantité totale du composant (a), du composant (b) et du composant (c).

18. Composition de matériau polymère organique selon la revendication 17, dans laquelle le composant (a) est contenu dans une proportion de 1% en poids -4,5% en poids et le composant (b) est contenu dans une proportion de 99% en poids - 95,5% en poids de la quantité totale du composant (a) et du composant (b).

19. Composition de matériau polymère organique selon l'une quelconque des revendications 11 à 18, dans laquelle l'anti-oxydant phénolique est au moins un élément choisi à partir de n-octadécyl 3-(3,5-di-tert-butyl-4-hydroxyphényl)propionate, de tétrakis[3-(3,5-di-tert-butyl-4-hydroxyphényl)-propionyloxyméthyl] méthane, de 1,3,5-tris(3,5-di-tert-butyl-4-hydroxybenzyl) isocyanurate, et du 1,3,5-triméthyl-2,4,6-tris(3,5-di-tert-butyl-4-hydroxy-benzyl)benzène.

20. Composition de matériau polymère organique selon l'une quelconque des revendications 11 à 19, dans laquelle l'anti-oxydant au phosphore, est au moins un élément choisi parmi le tris(2,4-di-tert-butylphényl) phosphite, le tétrakis(2,4-di-tert-butylphényl)-4,4'-biphénylènediphosphonite, le tétrakis(2,4-di-tert-butyl-5-méthylphényl)-4,4'-biphénylènedisphosphonite, le bis-2,4-di-tert-butylphényl) pentaérythritol diphosphite, le bis-2,6-di-tert-butyl-4-méthylphényl) pentaérythritol diphosphite, le 2,2'-méthylènebis (4,6-di-tert-butylphényl)-2-éthylhexyl phosphite, le bis[2-méthyl-4,6-bas(1,1-diméthyléthyl)phényl]éthyl phosphite, et le 2,2',2''-nitrilo(triéthyltris(3,3',5,5'-tétra-tert-butl-1,1'-biphényl-2,2'-diyl)phosphite].

21. Composition de matériau polymère organique selon l'une quelconque des revendications 11 à 20, dans laquelle le rapport en poids de la quantité de l'anti-oxydant phénolique et la quantité d'anti-oxydant au phosphore est de 1 :0,25 - 1 :4.

22. Composition de matériau polymère organique selon l'une quelconque des revendications 11 à 21, dans laquelle le polymère organique est une résine synthétique.

23. Composition de matériau polymère organique selon l'une quelconque des revendications 11 à 21, dans laquelle le polymère organique est une résine de polyoléfine.

24. Composition de matériau polymère organique selon l'une quelconque des revendications 11 à 21, dans laquelle le polymère organique est une résine de polyéthylène, une résine de polypropylène, un mélange ou un polymère compatible d'une résine de polyéthylène et d'une résine de polypropyléne, un polymère compatible contenant une résine de polyéthylène et/ou une résine de polypropylène, un copolymère éthylène-acétate de vinyle ou un copolymère éthylène-propylène.
